# EUROPEAN PATENT APPLICATION

(11) **EP 4 440 220 A1**
(43) Date of publication of application: **02.10.2024**
(21) Application number: 21965643.6
(22) Date of filing: 25.11.2021
(51) Int. Cl.: H04W 72/04, H04W 74/08

(54) **TERMINAL, RADIO COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); WANG, Jing, Beijing 100190 (CN); CHEN, Lan, Beijing 100190 (CN)
(74) Representative: Hoffmann Eitle
(86) International application number: PCT/JP2021/043288
(87) International publication number: WO 2023/095271

(57) **Abstract**

A terminal according to one aspect of the present disclosure includes a receiving section that receives a configuration related to repetition of a physical random access channel in a random access procedure, and a control section that determines, on the basis of the configuration, whether to perform repetition of reception or transmission of anything other than the physical random access channel, out of the random access procedure. According to one aspect of the present disclosure, it is possible to improve coverage in a random access procedure.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems (for example, NR), improvement in coverage is under study.

However, a random access procedure for the improvement in coverage is indefinite. Unless such a random access procedure is definite, communication throughput may be reduced.

Thus, an object of the present disclosure is to provide a terminal, a radio communication method, and a base station that improve coverage in a random access procedure.

### Solution to Problem

A terminal according to one aspect of the present disclosure includes a receiving section that receives a configuration related to repetition of a physical random access channel in a random access procedure, and a control section that determines, on the basis of the configuration, whether to perform repetition of reception or transmission of anything other than the physical random access channel, out of the random access procedure.

### Advantageous Effects of Invention

According to one aspect of the present disclosure, it is possible to improve coverage in a random access procedure.

### Brief Description of Drawings

[FIG. 1] FIG. 1 shows an example of a RACH configuration information element.
[FIG. 2] FIGS. 2A and 2B each shows an example of an association between a PRACH occasion and a beam.
[FIG. 3] FIG. 3 shows an example of PRACH configuration.
[FIG. 4] FIG. 4 shows an example of short sequence PRACH formats.
[FIG. 5] FIGS. 5A and 5B show examples of unit resource 1 and unit resource 2, respectively.
[FIG. 6] FIGS. 6A and 6B each shows an example of unit resource 3.
[FIG. 7] FIGS. 7A and 7B show examples of unit resource 4 and unit resource 5, respectively.
[FIG. 8] FIGS. 8A and 8B each shows another example of unit resource 5.
[FIG. 9] FIG. 9 shows yet another example of unit resource 5.
[FIG. 10] FIGS. 10A and 10B each shows an example of unit resource 2 according to variation A.
[FIG. 11] FIGS. 11A and 11B each shows an example of unit resource 5 according to variation A.
[FIG. 12] FIGS. 12A and 12B each shows an example of variation A1.
[FIG. 13] FIG. 13 shows an example of transmission operation 1.
[FIG. 14] FIG. 14 shows an example of transmission operation 2.
[FIG. 15] FIG. 15 shows an example of transmission operation 3.
[FIG. 16] FIG. 16 shows an example of monitoring operation 2.
[FIG. 17] FIG. 17 shows an example of window operation 1/window operation 2.
[FIG. 18] FIG. 18 shows an example of window operation 3a/window operation 3b/window operation 3c.
[FIG. 19] FIGS. 19A and 19B each shows an example of a ninth embodiment.
[FIG. 20] FIG. 20 is a diagram to show an example of a schematic structure of a radio communication system according to one embodiment.
[FIG. 21] FIG. 21 is a diagram to show an example of a structure of a base station according to one embodiment.
[FIG. 22] FIG. 22 is a diagram to show an example of a structure of a user terminal according to one embodiment.
[FIG. 23] FIG. 23 is a diagram to show an example of a hardware structure of the base station and the user terminal according to one embodiment.
[FIG. 24] FIG. 24 is a diagram to show an example of a vehicle according to one embodiment.

### Description of Embodiments

### (TCI, Spatial Relation, QCL)

For NR, control of reception processing (for example, at least one of reception, demapping, demodulation, and decoding) and transmission processing (for example, at least one of transmission, mapping, precoding, modulation, and coding) in a UE regarding at least one of a signal and a channel (which is expressed as a signal/channel) based on a transmission configuration indication state (TCI state) is under study.

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a certain signal/channel and another signal/channel are in a relationship of QCL, it may be indicated that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same, and such parameter(s) (which may be referred to as QCL parameter(s)) are described below:
- QCL type A (QCL-A): Doppler shift, Doppler spread, average delay, and delay spread
- QCL type B (QCL-B): Doppler shift and Doppler spread
- QCL type C (QCL-C): Doppler shift and average delay
- QCL type D (QCL-D): Spatial reception parameter

A case that the UE assumes that a certain control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

The physical layer signaling may be, for example, downlink control information (DCI).

A channel for which the TCI state or spatial relation is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), and a reference signal for QCL detection (also referred to as a QRS).

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An RS of QCL type X in a TCI state may mean an RS to have a relationship of QCL type X with (a DMRS for) a certain channel/signal, and this RS may be referred to as a QCL source of QCL type X in the TCI state.

### (Initial Access Procedure)

In an initial access procedure, a UE (RRC_IDLE mode) performs reception of an SS/PBCH block (SSB), transmission of Msg. 1 (PRACH/random access preamble/preamble), reception of Msg. 2 (PDCCH, PDSCH including a random access response (RAR)), transmission of Msg. 3 (PUSCH scheduled by an RAR UL grant), and reception of Msg. 4 (PDCCH, PDSCH including UE contention resolution identity). Subsequently, when ACK for Msg. 4 is transmitted by a base station (network) from the UE, an RRC connection is established (RRC_CONNECTED mode).

The reception of the SSB includes PSS detection, SSS detection, PBCH-DMRS detection, and PBCH reception. The PSS detection performs detection of part of a physical cell ID (PCI), detection of an OFDM symbol timing (synchronization), and (rough) frequency synchronization. The SSS detection includes detection of the physical cell ID. The PBCH-DMRS detection includes detection of (part of) an SSB index in a half radio frame (5 ms). The PBCH reception includes detection of a system frame number (SFN) and a radio frame timing (SSB index), reception of configuration information for remaining minimum system information (RMSI, SIB 1) reception, and recognition of whether the UE can camp on that cell (carrier).

The SSB has a band of 20 RB and time of 4 symbols. A transmission periodicity of the SSB can be configured on the basis of {5, 10, 20, 40, 80, 160} ms. In the half frame, a plurality of symbol locations of the SSB are defined on the basis of a frequency range (FR1, FR2).

The PBCH has a 56-bit payload. N repetitions of the PBCH are transmitted in a periodicity of 80 ms. N depends on the transmission periodicity of the SSB.

The system information is constituted by an MIB delivered by the PBCH, RMSI (SIB 1), and other system information (OSI). The SIB 1 includes RACH configuration and information for performing a RACH procedure. A time/frequency resource relationship between the SSB and a PDCCH monitoring resource for the SIB 1 is configured by the PBCH.

The base station using beam correspondence transmits a respective plurality of SSBs by using a plurality of beams every SSB transmission periodicity. The plurality of SSBs have a plurality of SSB indices. The UE that has detected one SSB transmits a PRACH in a RACH occasion associated with the SSB index, and receives an RAR in an RAR window.

### (Beam and Coverage)

In a high frequency band, unless beam forming is applied to a synchronization signal/reference signal, coverage becomes narrow, and it is difficult for the UE to identify the base station. On the other hand, applying the beam forming to the synchronization signal/reference signal in order to secure coverage causes a strong signal to be delivered in a specific direction, but makes it more difficult for signals to be delivered in directions other than that direction. In the base station before the UE is connected, assuming that a direction in which the UE exists is unknown, transmission of the synchronization signal/reference signal using a beam only in an appropriate direction fails. A method in which the base station transmits a plurality of synchronization signals/reference signals having respective beams in different directions, and recognizes which beam is identified by the UE is conceivable. When thin (narrow) beams are used for the coverage, many synchronization signals/reference signals are required to be transmitted, and thus overhead may increase, and frequency use efficiency may be reduced.

Using a thick (wide) beam in order to suppress overhead by reducing the number of beams (synchronization signals/reference signals) narrows coverage.

In future radio communication systems (for example, 6G), it is conceivable that use of frequency bands, such as millimeter waves and terahertz waves, advances further. It is conceivable that communication services are provided by developing a cell area/coverage by using multiple thin beams.

Expansion of the area using existing FR2 and use of a frequency band higher than existing FR2 are conceivable. In addition to multiple TRPs, reconfigurable intelligent surface (RIS), and the like, improvement in beam management is preferable for achieving these.

Coverage enhancement including PRACH enhancement for frequency range (FR) 2 is under study. For example, PRACH repetition using the same beam or different beams is under study.

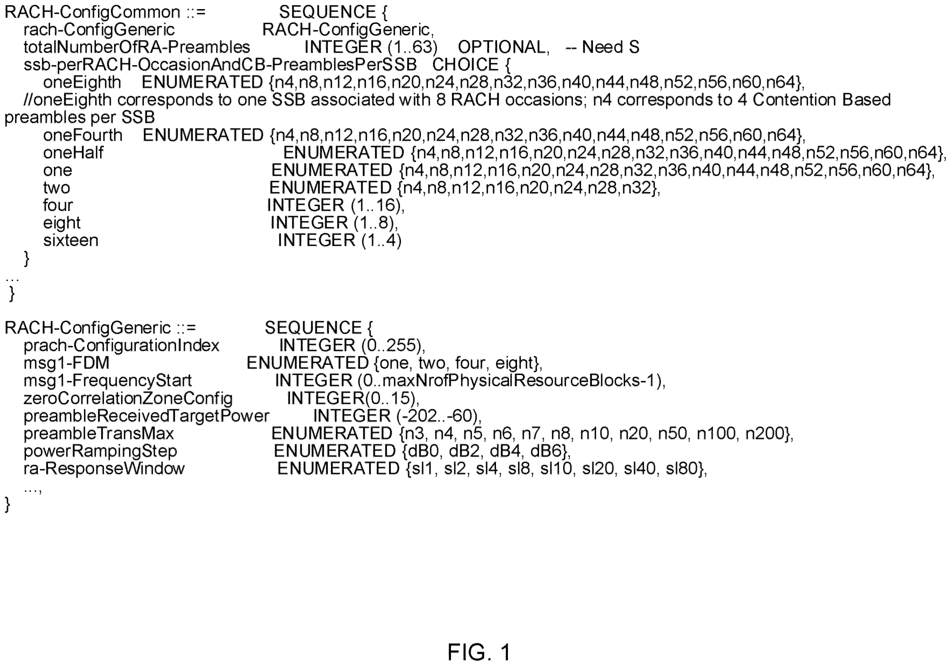

As shown in an example of FIG. 1, common RACH configuration (RACH-ConfigCommon) may include generic RACH configuration (rach-ConfigGeneric), a total number of RA preambles (totalNumberOfRA-Preambles), and an SSB for each RACH occasion and contention-based (CB) preambles for each SSB (ssb-perRACH-OccasionAndCB-PreamblesPerSSB). rach-ConfigGeneric may include a PRACH configuration index (prach-ConfigurationIndex) and message 1 FDM (msg1-FDM, the number of PRACH occasions FDMed in one time instance). ssb-perRACH-OccasionAndCB-PreamblesPerSSB may include, for the number of SSBs for each RACH occasion 1/8 (oneEighth, a case that one SSB is associated with 8 RACH occasions), the number of CB preambles for each SSB.

For a type 1 random access procedure (4-step random access procedure, message 1/2/3/4), the number N of SS/PBCH blocks associated with one PRACH occasion and the number R of CB preambles for each valid PRACH occasion or for each SS/PBCH block may be applied for the UE by ssb-perRACH-OccasionAndCB-PreamblesPerSSB.

For the type 1 random access procedure or for a type 2 random access procedure (2-step random access procedure, message A/B) accompanied by PRACH occasion configuration independent of the type 1 random access procedure, if N < 1, one SS/PBCH block is mapped to 1/N consecutive valid RACH occasions, and R CB preambles accompanied by consecutive indices associated with an SS/PBCH block index for each valid PRACH occasion start from preamble index 0. If N ≥ 1, R CB preambles accompanied by consecutive indices associated with SS/PBCH block index n (0 ≤ n <- N-1) for each valid PRACH occasion start from preamble index n * N_preamble^total/N. Here, N_preamble^total is given by totalNumberOfRA-Preambles for the type 1 random access procedure, and is given by msgA-TotalNumberOfRA-Preambles for the type 2 random access procedure accompanied by the PRACH occasion configuration independent of the type 1 random access procedure. N_preamble^total is a multiple of N.

An association period, starting from frame 0, for mapping SS/PBCH blocks to PRACH occasions is a minimum value in a set determined by a PRACH configuration period in accordance with a relationship (relationship defined in specifications) between a PRACH configuration period and an association period (the number of PRACH configuration periods) so that N_Tx^SSB SS/PBCH block indices are mapped to PRACH occasions at least one time in the association period. Here, the UE obtains N_Tx^SSB from values of SSB positions in a burst (ssb-PositionsInBurst) in SIB 1 or in common serving cell configuration (ServingCellConfigCommon). If a set of PRACH occasions or PRACH preambles not mapped to N_Tx^SSB SS/PBCH block indices is present after an integer number of cycles of mapping from SS/PBCH block indices to PRACH occasions in the association period, none of the SS/PBCH block indices is mapped to the set of PRACH occasions or PRACH preambles. An association pattern period includes one or more association periods, and is determined so that a pattern between PRACH occasions and SS/PBCH block indices repeats every 160 ms at most. If a PRACH occasion not associated with SS/PBCH block indices after an integer number of association periods is present, the PRACH occasion is not used for a PRACH.

For PRACH configuration periods 10, 20, 40, 80, and 160 [msec], association periods are {1, 2, 4, 8, 16}, {1, 2, 4, 8}, {1, 2, 4}, [1, 2], and {1}, respectively.

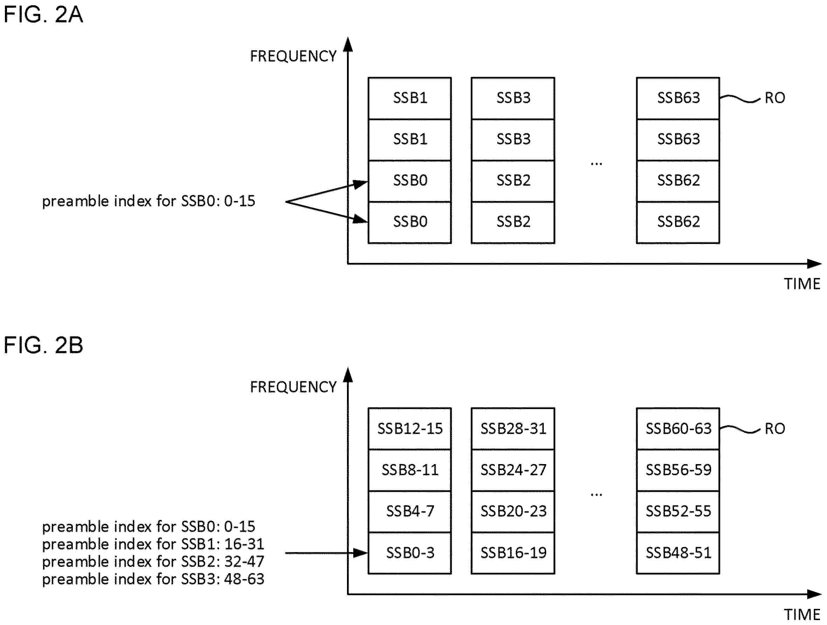

FIG. 2A shows an example (mapping 1) of an association between a PRACH occasion (RACH occasion (RO)) and a beam (SSB/CSI-RS). When ssb-perRACH-OccasionAndCB-PreamblesPerSSB indicates oneHalf, n16 (N = 1/2, R = 16), and msg1-FDM is 4, four ROs are FDMed in one time instance, and one SSB is mapped to two ROs. Preamble indices 0 to 15 are associated with two ROs, and preamble indices 0 to 15 are associated with SS0 B. Thus, when N < 1, one SSB is mapped to a plurality of ROs. Therefore, RO capacity for each beam can be enhanced.

FIG. 2B shows another example (mapping 2) of the association between the RO and the beam. When ssb-perRACH-OccasionAndCB-PreamblesPerSSB indicates n4, n16 (N = 4, R = 16), msg1-FDM is 4, and Npreamble^total is 64, four ROs are FDMed in one time instance, and four SSBs are mapped to one RO. One RO is associated with SSB 0 to SSB 3. Preamble indices 0 to 15 are associated with SSB 0, preamble indices 15 to 31 are associated with SSB 1, preamble indices 32 to 47 are associated with SSB 2, and preamble indices 48 to 63 are associated with SSB 3 SSB 3 is. Thus, the same RO is associated with different SS/PBCH block indices, and different preambles use different SS/PBCH block indices. The base station can distinguish between associated SS/PBCH block indices by using a received PRACH.

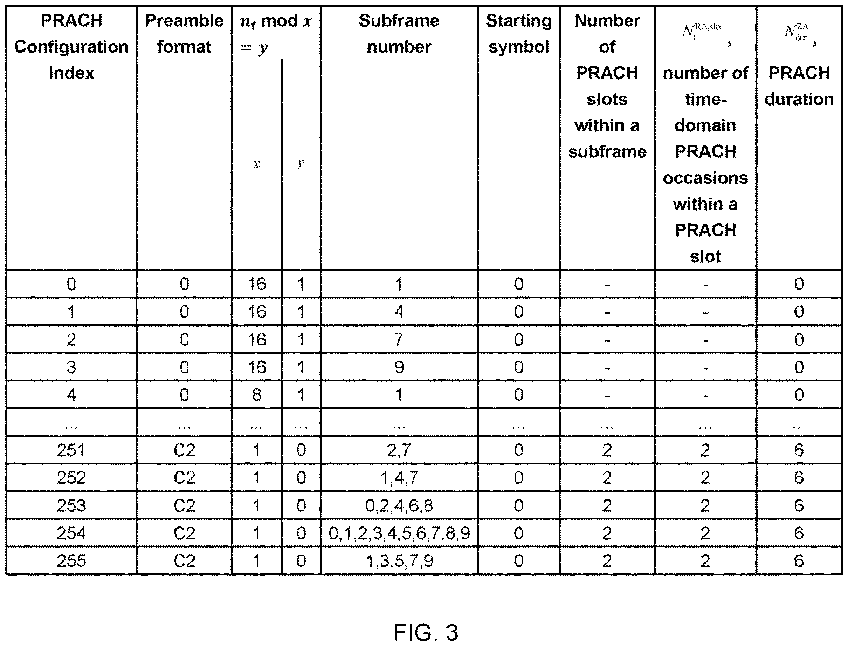

The random access preamble can be transmitted only in a time resource defined in random access configuration of specifications, and depends on whether FR1 or FR2 and a spectrum type (paired spectrum/supplementary uplink (SUL)/unpaired spectrum). The PRACH configuration index is given by a higher layer parameter prach-ConfigurationIndex or by msgA-PRACH-ConfigurationIndex, if configured. In the specifications, respective values of the PRACH configuration index are associated with at least one of preamble formats, x and y in n_f (frame number) mod x = y, subframe numbers, starting symbols, the numbers of PRACH slots in a subframe, the numbers N_t^RA,slot of time domain PRACH occasions in a PRACH slot, and PRACH duration N_dur^RA (FIG. 3).

A type of the RACH procedure triggered by whether PRACH repetition can be applied to a scenario or by different purposes varies. The type of the RACH procedure may be at least one of the following.
- Contention-free random access (CFRA), PDCCH order RA (PDCCH ordered RA, RA initiated by PDCCH order), CFRA for beam failure recovery (BFR), CFRA for system information (SI) request, CFRA for reconfiguration accompanied by synchronization (reconfiguration with sync), and the like
- Contention-based random access (CBRA), RA triggered by MAC entity, RA triggered by RRC accompanied by event, CBRA for BFR, and the like
- 4-step RACH
- 2-step RACH

However, configuration/procedure for the PRACH repetition is indefinite. For example, how to configure PRACH resources for the repetition (for example, a repetition pattern and the number of repetitions), UE operation for repetitive preamble transmission, an impact on a RACH-related counter/timer, and the like are indefinite. Unless such configuration/procedure is definite, communication quality/communication throughput may deteriorate.

### (RA Response Window)

A RA response window (ra-ResponseWindow) is a time window for monitoring a RA response (RAR) (only for SpCells). An RA contention resolution timer (ra-ContentionResolutionTimer) is a timer for RA contention resolution (only for SpCells). A Msg.B response window is a time window for monitoring a RA response (RAR) for a 2-step RA type (only for SpCells).

When an RA preamble is transmitted, a MAC entity performs operation 1 to operation 3 below regardless of a possibility that a measurement gap occurs.

### [Operation 1]

If a contention-free RA preamble for a BFR request has been transmitted by the MAC entity, the MAC entity performs operation 1-1 and operation 1-2 below.
[[Operation 1-1]] The MAC entity starts, in the first PDCCH occasion since an end of the RA preamble transmission, ra-ResponseWindow configured in BFR configuration (BeamFailureRecoveryConfig).
[[Operation 1-2]] While ra-ResponseWindow is operating, the MAC entity monitors PDCCH transmission in a search space indicated by a BFR search space ID (recoverySearchSpaceId) of an SpCell identified by a C-radio network temporary identifier (RNTI).

### [Operation 2]

Otherwise, the MAC entity performs operation 2-1 and operation 2-2 below.
[[Operation 2-1]] The MAC entity starts, in the first PDCCH occasion since an end of the RA preamble transmission, ra-ResponseWindow configured in common RACH configuration (RACH-ConfigCommon).
[[Operation 2-2]] While ra-ResponseWindow is operating, the MAC entity monitors PDCCH transmission in an RAR SpCell identified by an RA-RNTI.

### [Operation 3]

If ra-ResponseWindow configured in BeamFailureRecoveryConfig has expired, and PDCCH transmission on the search space indicated by recoverySearchSpaceId for the C-RNTI has been received on a serving cell in which that preamble has been transmitted or if ra-ResponseWindow configured in RACH-ConfigCommon has expired, and an RAR including RA preamble identifiers coinciding with a transmitted preamble index (PREAMBLE_INDEX) has been received, the MAC entity regards the RAR reception as unsuccessful, and increments a preamble transmission counter (PREAMBLE_TRANSMISSION_COUNTER) by using 1.

The MAC entity may terminate ra-ResponseWindow after success in receiving an RAR including RA preamble identifiers coinciding with the transmitted PREAMBLE _INDEX (may terminate monitoring for the RAR).

For PDCCH monitoring in the RA response window, there are two cases of a PDCCH for a base station response to BFR and a PDCCH for an RAR. Description below may be employed in both the cases.

When an MSGA (Msg.A) preamble is transmitted, a MAC entity performs operation 4 to operation 6 below regardless of a possibility that a measurement gap occurs.

### [Operation 4]

The MAC entity starts, in a PDCCH monitoring window defined in specifications, a Msg.B response window (msgB-ResponseWindow).

msgB-ResponseWindow may be started in the first symbol of the earliest CORESET in which reception of a PDCCH for a type 1-PDCCH CSS set has been configured for the UE, the type 1-PDCCH CSS set being at least one symbol after the last symbol of a PRACH occasion corresponding to PRACH transmission. A length of msgB-ResponseWindow may correspond to SCS for the type 1-PDCCH CSS set.

### [Operation 5]

While msgB-ResponseWindow is operating, the MAC entity monitors PDCCH transmission in an RAR SpCell identified by an MSGB-RNTI.

### [Operation 6]

If a C-RNTI MAC CE is included in that MSGA, while msgB-ResponseWindow is operating, the MAC entity monitors PDCCH transmission in an RAR SpCell identified by a C-RNTI.

The RA-RNTI associated with a PRACH occasion in which the RA preamble is transmitted is calculated as follows. RA-RNTI = 1 + s_id + 14 × t_id + 14 × 80 × f_id + 14 × 80 × 8 × ul_carrier_id

Here, s_id is an index of the first OFDM symbol of the PRACH occasion (0 ≤ s_id < 14). t_id is an index of the first slot of the PRACH occasion in a system frame (0 ≤ t_id < 80). Subcarrier spacing (SCS) for determination of t_id is based on a value of µ. f_id is an index of the PRACH occasion in a frequency domain (0 ≤ f_id < 8). ul_carrier _id is a UL carrier used for the RA preamble transmission (0 for a normal uplink (NUL) carrier, 1 for a supplementary uplink (SUL) carrier). The RA-RNTI is calculated in accordance with the specifications. The RA-RNTI is an RNTI for the 4-step RACH.

The MSGB-RNTI associated with a PRACH occasion in which the RA preamble is transmitted is calculated as follows. MSGB-RNTI = 1 + s_id + 14 × t_id + 14 × 80 × f_id + 14 × 80 × 8 × ul_carrirer_id + 14 × 80 × 8 × 2

Here, s_id is an index of the first OFDM symbol of the PRACH occasion (0 ≤ s_id < 14). t_id is an index of the first slot of the PRACH occasion in a system frame (0 ≤ t_id < 80). Subcarrier spacing (SCS) for determination of t_id is based on a value of µ. f_id is an index of the PRACH occasion in a frequency domain (0 ≤ f_id < 8). ul_carrier_id is a UL carrier used for the RA preamble transmission (0 for a normal uplink (NUL) carrier, 1 for a supplementary uplink (SUL) carrier). The MSGB-RNTI is an RNTI for the 2-step RACH.

However, repetition for an RAR is indefinite. For example, whether Msg. 2 supports the repetition, an impact related to ra-ResponseWindow, an impact related to the RA-RNTI, and the like are indefinite. Unless such configuration/procedure is definite, communication quality/communication throughput may deteriorate.

Thus, the inventors of the present invention came up with the idea of configuration/procedure for repetition in a random access procedure.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, activate, deactivate, indicate (or specify), select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, an information element (IE), configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a sub-set, and the like may be interchangeably interpreted.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (COntrol REsource SET (CORESET)), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, or a PUCCH resource group), a resource (for example, a reference signal resource or an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

In the present disclosure, an SSB/CSI-RS index/indicator, a beam index, and a TCI state may be interchangeably interpreted.

### (Radio Communication Method)

In the respective embodiments, a period, a periodicity, a frame, a subframe, a slot, a symbol, an occasion, and RO may be interchangeably interpreted.

In the respective embodiments, a repetition period, a repetition periodicity, and a repetition cycle may be interchangeably interpreted.

In the respective embodiments, an occasion, a RACH occasion (RO), a PRACH occasion, and a repetition resource may be interchangeably interpreted.

In the respective embodiments, a PRACH, a preamble, a PRACH preamble, a sequence, a preamble format, and message (Msg.) 1 may be interchangeably interpreted. In the respective embodiments, a response to a PRACH, an RAR, Msg. 2, Msg. B, and Msg. 4 may be interchangeably interpreted. In the respective embodiments, transmission of anything other than a PRACH in a random access procedure, Msg. 3, a PUSCH scheduled by RAR, HARQ-ACK/PUCCH for Msg. 4, and a Msg. A PUSCH may be interchangeably interpreted.

In the respective embodiments, a beam, an SSB, and an SSB index may be interchangeably interpreted.

In the respective embodiments, repetition, repetition accompanied by the same beam, a repetition RO accompanied by the same beam, and repetition associated with different SSB indexes may be interchangeably interpreted.

In the respective embodiments, a random access (RA) procedure, CFRA/CBRA, a 4-step RACH/2-step RACH, a random access procedure of a specific type, and a random access procedure using a specific PRACH format may be interchangeably interpreted.

For coverage enhancement, PRACH repetition may be employed.

If a PRACH is repeated a plurality of times, PRACH coverage (link budget) is enhanced. Only PRACH format B4 (the longest format (having the most symbols) in a short sequence), other some PRACH formats, or all PRACH formats may be applied to the PRACH repetition.

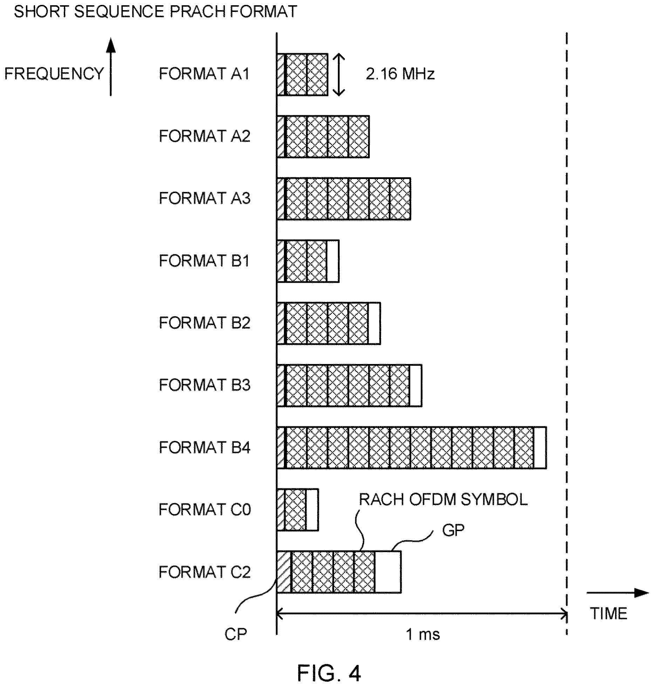

FIG. 4 shows an example of short sequence PRACH formats (formats A1, A2, A3, B1, B2, B3, B4, C0, and C2). For the short sequence, the PRACH format may be scaled on the basis of PRACH SCS.

Only a 4-step RACH may be applied to the PRACH repetition. A possibility that the 4-step RACH is used for a scenario with limited coverage is the highest. A 2-step RACH may also be applied to the PRACH repetition.

### <First Embodiment>

This embodiment relates to PRACH repetition.

For CFRA/CBRA, PRACH repetition accompanied by the same beam may be applied to at least one of RA according to target 1a-1 to target 1a-6 below.

### [Target 1a-1]

Only CFRA.

### [Target 1a-2]

Only CBRA.

### [Target 1a-3]

Both CFRA and CBRA.

### [Target 1a-4]

RA out of CFRA and CBRA, the RA being reported by a UE capability. For at least one of the CFRA and the CBRA, a UE capability related to PRACH repetition accompanied by the same beam may be defined, and for RA of the at least one of the CFRA and the CBRA, a case that a UE supports the PRACH repetition accompanied by the same beam may be reported by the UE capability.

### [Target 1a-5]

RA out of CFRA and CBRA, the RA being configured by RRC signaling. For an RRC CONNECTED UE, the RRC signaling may configure enabling/disabling of PRACH repetition for at least one of the CFRA and the CBRA.

### [Target 1a-6]

RA for a specific RA purpose. With respect to PRACH repetition, at least one of availability and a UE capability may be defined for the specific RA purpose, and the specific RA purpose may be indicated by the at least one of the availability and the UE capability. The availability may be an information element (higher layer parameter) to enable PRACH repetition for the RA for the specific RA purpose. The UE capability may indicate that PRACH repetition is supported for the RA for the specific RA purpose. The specific RA purpose may be, for example, PDCCH order RA, RA for an SI request, RA for BFR, RA triggered by a MAC layer, RA triggered by an RRC layer, or the like.

For 2-step RA/4-step RA, the PRACH repetition accompanied by the same beam may be applied to at least one of RA according to target 1b-1 to target 1b-5 below.

### [Target 1b-1]

Only 2-step RA.

### [Target 1b-2]

Only 4-step RA.

### [Target 1b-3]

Both 2-step RA and 4-step RA.

### [Target 1b-4]

RA out of 2-step RA and 4-step RA, the RA being reported by a UE capability. For at least one of the 2-step RA and the 4-step RA, a UE capability related to PRACH repetition accompanied by the same beam may be defined, and for RA of the at least one of the 2-step RA and the 4-step RA, a case that the UE supports the PRACH repetition accompanied by the same beam may be reported by the UE capability.

### [Target 1b-5]

RA out of 2-step RA and 4-step RA, the RA being configured by RRC signaling. For an RRC_CONNECTED UE, the RRC signaling may configure enabling/disabling of PRACH repetition for at least one of the 2-step RA and the 4-step RA.

Considering different PRACH formats, the PRACH repetition may be applied to some or all PRACH formats. The UE capability related to the PRACH repetition may be defined for one, some, or all PRACH formats.

The PRACH repetition accompanied by the same beam may be applied to some or all of an RRC IDLE UE, an RRC INACTIVE UE, and an RRC CONNECTED UE. New PRACH configuration for applying, to the IDLE/INACTIVE UE, the PRACH repetition accompanied by the same beam may be provided in an SIB. New PRACH configuration/indication for applying, to the CONNECTED UE, the PRACH repetition accompanied by the same beam may be provided by RRC signaling/MAC CE/DCI.

At least one of the conditions/targets available for the PRACH repetition accompanied by the same beam in this embodiment may be a condition/target available for PRACH repetition accompanied by different beams.

According to this embodiment, a condition/target to which PRACH repetition accompanied by the same beam or different is applied becomes definite.

### <Second Embodiment>

This embodiment relates to configuration of a PRACH repetition pattern/PRACH repetition resource/number of PRACH repetitions.

The PRACH repetition pattern/resource may be repeated for each unit resource of at least one of unit resource 1 to unit resource 6 below. The at least one unit resource of unit resource 1 to unit resource 6 may be configured by SIC/RRC IE, or may be defined in specifications.
[Unit Resource 1] An association period. The association period may be X SSB mapping periodicities/cycles, or may be a period including an RO mapped to all SSBs and an unused RO, the unused RO being capable of being mapped to a beam for the repetition.
[Unit Resource 2] A PRACH configuration period/periodicity.
[Unit Resource 3] X time units. For example, the time units may be PRACH occasions (ROs) for a slot/subframe/time domain.
[Unit Resource 4] X frequency units. For example, the frequency units may be PRACH occasions for a frequency domain.
[Unit Resource 5] X PRACH occasions (ROs)
[Unit Resource 6] X SSBs (PRACH occasions (ROs) mapped to X SSBs)

As the unit resource gets closer to unit resource 6 from unit resource 1, two PRACH repetitions corresponding to the same SSB become closer to each other.

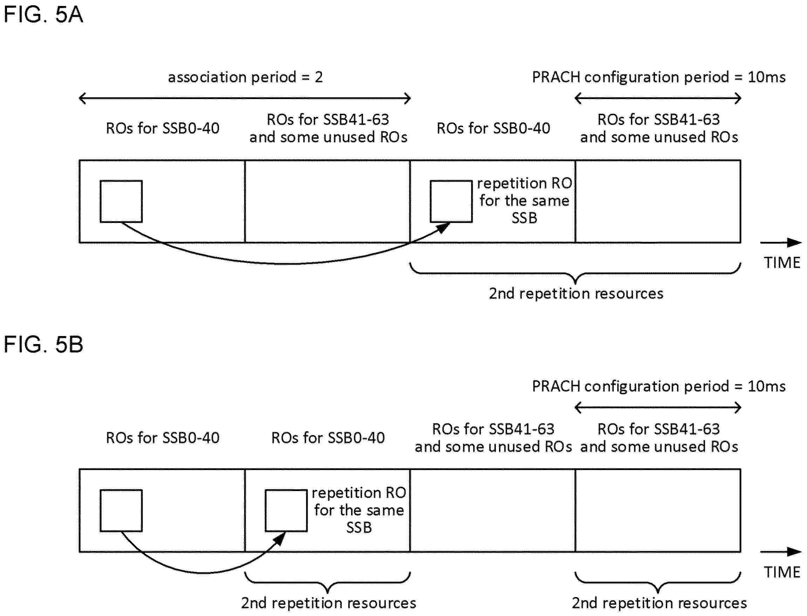

For unit resource 1, the second and subsequent repetition resources may occur after all SSBs are mapped to PRACH occasions at least one time. In an example of FIG. 5A, a length of the PRACH configuration period is 10 ms. In this example, a repetition resource (association period) is two PRACH configuration periods. In each repetition resource, ROs for SSBs 0 to 40 are present in the first PRACH configuration period, and ROs for SSBs 41 to 63 and unused ROs are present in the second PRACH configuration period. In ROs for the same SSB in respective repetition resources, a PRACH is repeated. In this example, the unused ROs are not used for the repetition.

For unit resource 2 to unit resource 6, the second repetition resource may occur before all SSBs are mapped to PRACH occasions at least one time. In an example of FIG. 5B related to unit resource 2, the repetition resource is one PRACH configuration period. In this example, the number of repetitions is 2. In each of the first and second repetition resources (PRACH configuration periods), ROs for SSBs 0 to 40 are present. In each of the subsequent first and second repetition resources (PRACH configuration periods), ROs for SSBs 41 to 63 and unused ROs are present. In ROs for the same SSB in respective repetition resources, a PRACH is repeated.

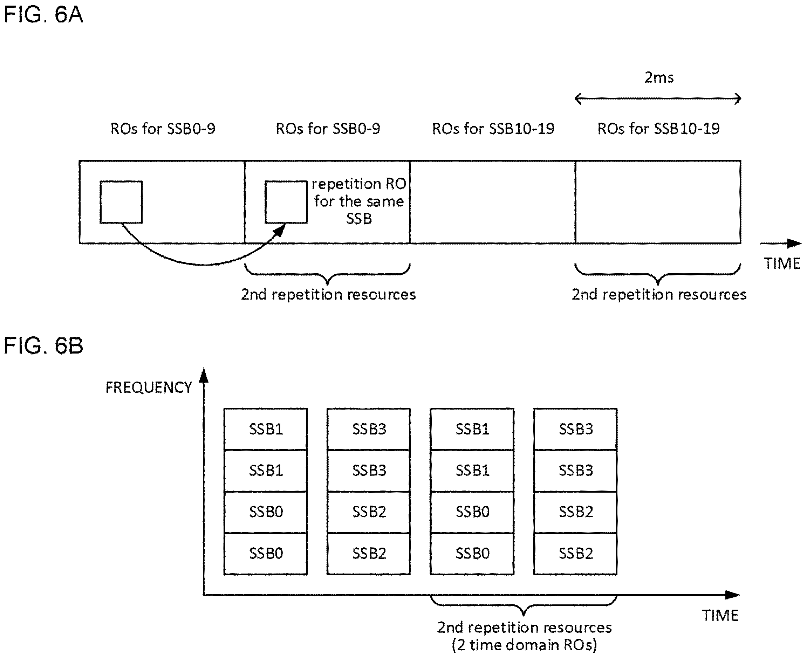

In an example of FIG. 6A related to unit resource 3, the repetition resource is 2 ms. In this example, the number of repetitions is 2. In each of the first and second repetition resources, ROs for SSBs 0 to 9 are present. In each of the subsequent first and second repetition resources, ROs for SSBs 10 to 19 are present. In ROs for the same SSB in respective repetition resources, a PRACH is repeated.

In an example of FIG. 6B related to unit resource 3, the repetition resource is two time domain ROs in accordance with mapping 1 mentioned above. In the first repetition resource, SSB 0, SSB 0, SSB 1, and SSB 1 are mapped to four ROs in the first time domain RO, and SSB 2, SSB 2, SSB 3, and SSB 3 are mapped to four ROs in the second time domain RO. Also in the second repetition resource, the same SSBs as those of the first repetition resource are mapped. In ROs for the same SSB in respective repetition resources, a PRACH is repeated.

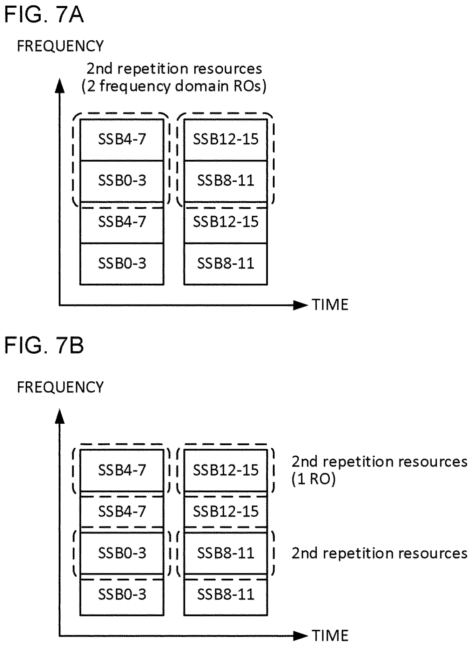

In an example of FIG. 7A related to unit resource 4, the repetition resource is two frequency domain ROs in accordance with mapping 2 mentioned above. SSBs 0 to 3 and SSBs 4 to 7 are mapped to two respective frequency domain ROs in the first time domain RO in the first repetition resource. Also in the second repetition resource, the same SSBs as those of the first repetition resource are mapped. In ROs for the same SSB in respective repetition resources, a PRACH is repeated.

In an example of FIG. 7B related to unit resource 5, the repetition resource is four ROs in accordance with mapping 2 mentioned above. SSBs 0 to 3, SSBs 4 to 7, SSBs 8 to 11, and SSBs 12 to 15 are mapped to four respective ROs in the first repetition resource (first time domain RO). Also in the second repetition resource (second time domain RO), the same SSBs as those of the first repetition resource are mapped. In ROs for the same SSB in respective repetition resources, a PRACH is repeated.

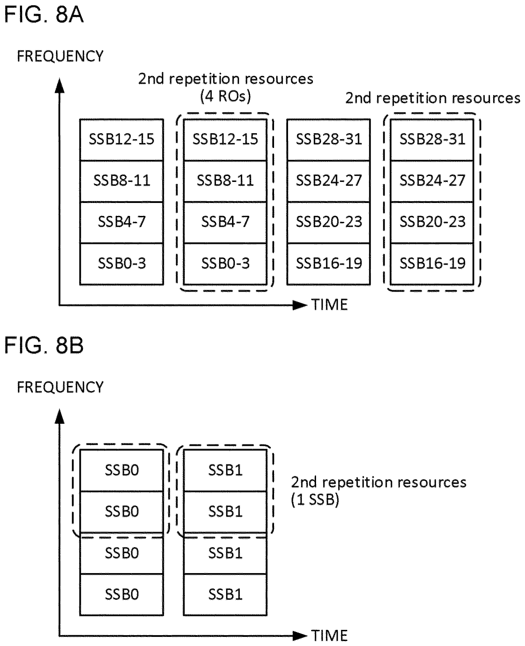

In an example of FIG. 8A related to unit resource 5, the repetition resource is one RO in accordance with mapping 2 mentioned above. SSBs 0 to 3 are mapped to one RO in the first repetition resource (first frequency domain RO). Also in the second repetition resource (second frequency domain RO), the same SSBs as those of the first repetition resource are mapped. In ROs for the same SSB in respective repetition resources, a PRACH is repeated.

In an example of FIG. 8B related to unit resource 5, the repetition resource is one SSB (RO mapped to one SSB) in accordance with mapping 1 mentioned above. One SSB is mapped to two frequency domain ROs. SSB 0 is mapped to the first and second ROs (first and second frequency domain ROs) in the first repetition resource. Also in the second repetition resource (third and fourth ROs, third and fourth frequency domain ROs), the same SSB as that of the first repetition resource is mapped. In ROs for the same SSB in respective repetition resources, a PRACH is repeated.

The number of repetitions may be configured/indicated by an SIB/RRC IE explicitly or implicitly, or may be defined in specifications.

In the explicit indication, the number Y of repetitions may be set to 1, 2, 3, 4, or the like. Y = 1 may indicate that the repetition is absent. Together with the number of repetitions, a repetition period/periodicity may be configured for a UE, or may be calculated/determined by the UE. For example, when the number of repetitions is 2 in unit resource 1 mentioned above, the UE may determine/calculate the repetition period as 20 * 2 = 40 ms. That is, Y repetitions may occur in 40 ms.

The explicit indication may only indicate whether the repetition is invalid (absent) or valid. In this case, a default number of repetitions may be defined in the specifications. When the explicit indication indicates that the repetition is valid, the number of repetitions may be the default number of repetitions.

A cell-specific number of PRACH repetitions may be broadcasted by the SIB. A UE-specific number of PRACH repetitions may be configured by RRC. The UE-specific number of PRACH repetitions may be applied to a PRACH in an RRC INACTIVE/CONNECTED UE. The UE may determine the number of actual PRACH repetitions in accordance with a determination rule or UE implementation. For example, when a measurement value of RSRP/RSRQ/SINR/quality/power of an SSB is lower than a threshold value, and PRACH repetition has been configured for the UE, the UE may transmit a PRACH a plurality of times (may transmit the PRACH repetition). The threshold value may be defined in specifications, or may be configured by an RRC IE. A plurality of threshold values/ranges associated with the number of PRACH repetitions may be configured. For example, the UE may determine the number of PRACH repetitions corresponding to a maximum threshold value above the measurement value out of the plurality of threshold values, or may determine the number of PRACH repetitions corresponding to a range including the measurement value out of the plurality of ranges. For example, when the measurement value is RSRP, the number of repetitions in a case where the measurement value < M_1 [dBm] may be 4, the number of repetitions in a case where M_1 < the measurement value ≤ M_2 [dBm] may be 2, and the number of repetitions in a case where M_2 < the measurement value [dBm] may be 1.

Operation for the UE to determine the number of repetitions may be employed only in a UE to support PRACH repetition.

In the implicit indication, the UE may determine/calculate the number of repetitions on the basis of a determination rule or limitation. For example, the UE may calculate the number of repetitions on the basis of an indicated/defined repetition period. For example, when a repetition period has been defined/configured as 160 ms in unit resource 1 mentioned above, the UE may determine/calculate the repetition period as 160 ms/20 = 8 ms.

The repetition period may mean that mapping from all indicated SSB indices to ROs is repeated Y times in the period.

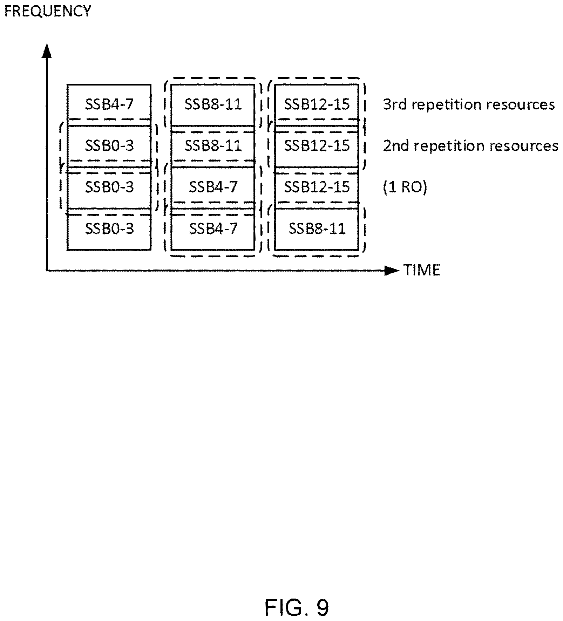

In an example of FIG. 9 related to unit resource 5, the number of repetitions is 3, and the repetition resource is one RO in accordance with mapping 2 mentioned above. SSBs 0 to 3 are mapped to one RO in the first repetition resource (first frequency domain RO). Also in each of the second and third repetition resources (second and third frequency domain ROs), the same SSBs as those of the first repetition resource are mapped. In ROs for the same SSB in respective repetition resources, a PRACH is repeated.

The first PRACH transmission may always be a single PRACH transmission. If Msg. 2 (RAR) reception is absent, the UE may transmit a PRACH accompanied by repetition. The PRACH accompanied by the repetition may be accompanied by power ramping.

### <<Variation A>>

Different PRACH resources (including preambles/ROs) with different numbers of repetitions may be configured. In this case, for a case with limited coverage, the UE can select an RO/preamble with repetition configuration. The UE having satisfactory coverage can select an RO/preamble without repetition configuration. For the UE, for example, the number of repetitions for SSBs 0 to 15 may be 1, the number of repetitions for SSBs 16 to 31 may be 2, the number of repetitions for SSBs 32 to 47 may be 3, and the number of repetitions for SSBs 48 to 63 may be 4. For example, the number of repetitions for preambles 0 to 31 may be 1, and the number of repetitions for preambles 32 to 63 may be 4.

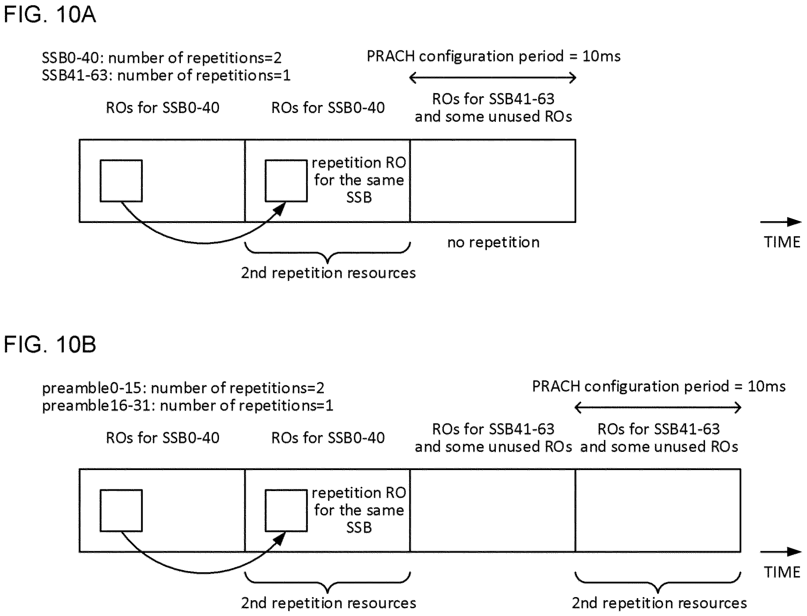

In an example of FIG. 10A related to unit resource 2, the repetition resource is one PRACH configuration period (10 ms). The number of repetitions for ROs for SSBs 0 to 40 is 2, and the number of repetitions for ROs for SSBs 41 to 63 is 1. In each of the first and second repetition resources (PRACH configuration periods), ROs for SSBs 0 to 40 are present. In ROs for the same SSB in respective repetition resources, a PRACH is repeated. In a subsequent PRACH configuration period, ROs for SSBs 41 to 63 and unused ROs are present. The PRACH in this PRACH configuration period is not repeated.

In an example of FIG. 10B related to unit resource 2, the repetition resource is one PRACH configuration period (10 ms). In this example, the number of repetitions for preambles 0 to 15 is 2, and the number of repetitions for preambles 16 to 31 is 1.

If any one of the preambles 0 to 15 is used, the number of repetitions is 2. In each of the first and second repetition resources (PRACH configuration periods), ROs for SSBs 0 to 40 are present. In each of the subsequent first and second repetition resources (PRACH configuration periods), ROs for SSBs 41 to 63 and unused ROs are present. In ROs for the same SSB in respective repetition resources, a PRACH is repeated. When a base station has decoded/received, in the first repetition resource, preamble 1 associated with SSB #x, the base station assumes that the same preamble associated with the same SSB is decoded/received in the second repetition resource. The base station may perform joint decoding/reception in order to enhance PRACH decoding/reception performance.

If any one of the preambles 16 to 31 is used, the repetition is absent. When the base station has decoded/received, in the first repetition resource, preamble 17 associated with SSB #y, the base station assumes that the repetition associated with the same SSB is absent in the second repetition resource. However, the base station may decode/receive, in the second repetition resource, a preamble associated with SSB #y. In this case, the base station may recognize the preamble as a preamble from another UE for access. The base station may not perform joint decoding/reception of two preambles.

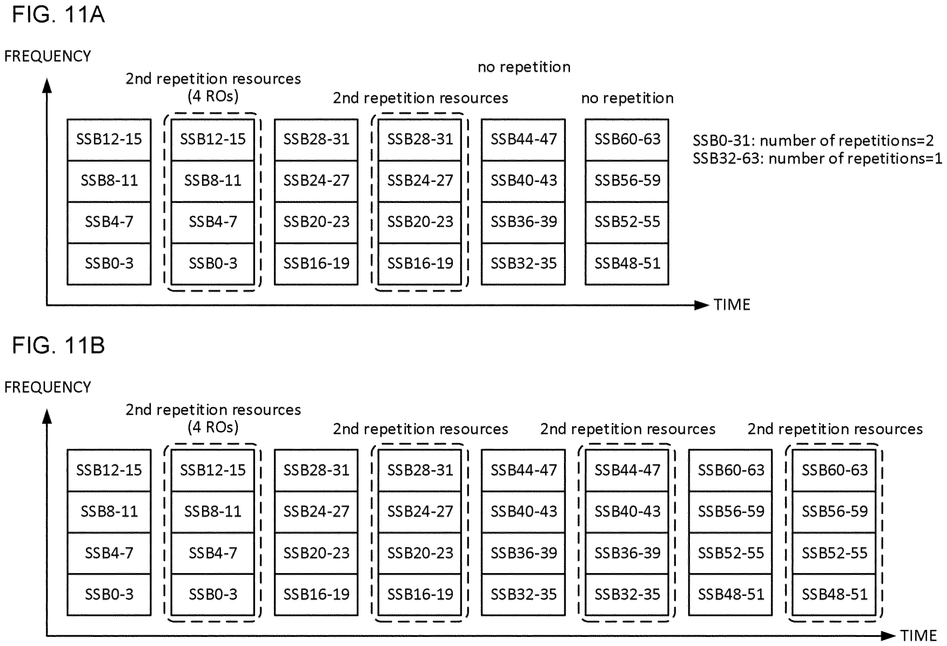

In an example of FIG. 11A related to unit resource 5, the repetition resource is four ROs in accordance with mapping 2 mentioned above. The number of repetitions for ROs for SSBs 0 to 40 is 2, and the number of repetitions for ROs for SSBs 41 to 63 is 1. SSBs 0 to 3, SSBs 4 to 7, SSBs 8 to 11, and SSBs 12 to 15 are mapped to four respective ROs in the first repetition resource (first time domain RO). Also in the second repetition resource (second time domain RO), the same SSBs as those of the first repetition resource are mapped. In ROs for the same SSB in respective repetition resources, a PRACH is repeated. SSBs 32 to 35, SSBs 36 to 39, SSBs 40 to 43, and SSBs 44 to 47 are mapped to four respective ROs in the fifth time domain RO. The PRACH repetition for these ROs is absent.

In an example of FIG. 11B related to unit resource 5, the repetition resource is four ROs in accordance with mapping 2 mentioned above. The number of repetitions for preamble indices 0 to 7 for SSB 0 is 1, and the number of repetitions for preamble indices 8 to 15 for SSB 0 is 2. The number of repetitions for preamble indices 16 to 23 for SSB 1 is 1, and the number of repetitions for preamble indices 24 to 31 for SSB 1 is 2. The number of repetitions for preamble indices 32 to 39 for SSB 2 is 1, and the number of repetitions for preamble indices 40 to 47 for SSB 2 is 2. The number of repetitions for preamble indices 48 to 55 for SSB 3 is 1, and the number of repetitions for preamble indices 56 to 63 for SSB 3 is 2.

SSBs 0 to 3, SSBs 4 to 7, SSBs 8 to 11, and SSBs 12 to 15 are mapped to four respective ROs in the first time domain RO. When any one of preamble indices 8 to 15 is used for SSB 0, any one of preamble indices SSB 24 to 31 is used for SSB 1, any one of preamble indices 40 to 47 is used for SSB 2, and any one of preamble indices 56 to 63 is used for SSB 3, the number of repetitions is 2 for the first time domain RO. Also in the second repetition resource (second time domain RO), the same SSBs as those of the first repetition resource are mapped. In ROs for the same SSB in respective repetition resources, a PRACH is repeated.

### <<Variation A1>>

When the number of SSBs for each RO (ssb-perRACH-Occasion) < 1, configuration of a (additional) repetition resource may be absent. If enabling of the repetition has been configured, some ROs mapped to one SSB may be regarded as the repetition resource. The number of repetitions may be configured.

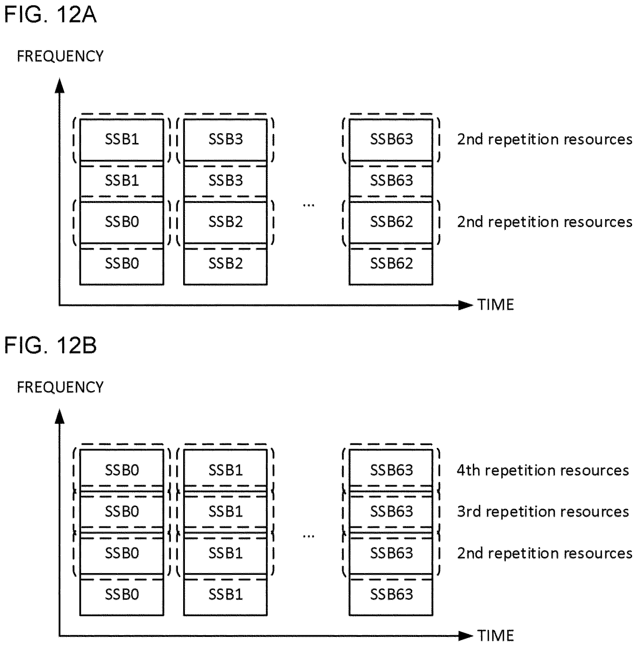

In an example of FIG. 12A, when OccasionAndCB-PreamblesPerSSB indicates oneHalf, n16 (N = 1/2, R = 16), and msg1-FDM is 4 in accordance with mapping 1 mentioned above, four ROs are FDMed in one time instance, and one SSB is mapped to two ROs (mapping 1 mentioned above).

In this example, if the repetition has been configured, the UE may regard the second RO mapped to each SSB as an RO for the second repetition for the SSB. In this example, some SSBs/ROs with a certain number of repetitions may be configured, and some SSBs/ROs with repetition may not be configured. In this example, different preambles may be associated with different numbers of repetitions including the number of repetitions = 1 (without repetition).

In an example of FIG. 12B, when ssb-perRACH-OccasionAndCB-PreamblesPerSSB indicates oneFourth, n16 (N = 1/4, R = 16), and msg1-FDM is 4, four ROs are FDMed in one time instance, and four ROs are mapped to one SSB (mapping 2 mentioned above).

In this example, if the repetition has been configured, and the number of repetitions is 2, the UE may regard two ROs out of four ROs mapped to each SSB as ROs for the second repetition for the SSB. In this example, if the repetition has been configured, and the number of repetitions is 4, the UE may regard the second, third, and fourth ROs out of four ROs mapped to each SSB as ROs for the second, third, and fourth repetitions for the SSB, respectively. In this example, different SSBs/ROs may be associated with different numbers of repetitions including the number of repetitions = 1 (without repetition). In this example, different preambles may be associated with different numbers of repetitions including the number of repetitions = 1 (without repetition).

According to this embodiment, a PRACH repetition pattern/PRACH repetition resource/number of PRACH repetitions can be determined appropriately.

### <Third Embodiment>

In Rel. 15/16, a PRACH occasion and an SSB index are normally mapped in specifications. Definitions of PRACH beams are absent in the specifications. However, beam correspondence is mandatory in Rel. 15, and thus the most likely UE implementation is to use an SSB beam associated with the PRACH occasion. In this case, a base station can use an SSB for reception of a PRACH associated with the PRACH occasion. The beam may be a CSI-RS beam.

This embodiment relates to UE operation related to PRACH repetition transmission.

For configuration of any one of unit resource 1 to unit resource 6 mentioned above, an association between a plurality of PRACH resources repeated for the same beam may be recognized by a UE. Which RO is the x th repetition transmission may be recognized by the UE.

### <<Transmission Operation 1»

With respect to a selected beam (timing of beam determination), if subsequent available RO associated with the beam is not the first repetition transmission RO in a repetition period, the UE may follow any one of transmission start RO 1 to transmission start RO 2 below.

### [Transmission Start RO 1]

The UE may transmit the same PRACH preamble on ROs associated with repetition of the same PRACH preamble until the last repetition RO in the repetition period (from the x th repetition until the last repetition). The number of actual repetitions may be less than a maximum number of repetitions in one repetition period (configured value/reported value). This operation may, if the base station has received a PRACH preamble in the x th repetition RO associated with the SSB, mean that the base station assumes that the same preamble is received in the (X+1) th repetition RO, (X+2) th repetition RO, and the like. This operation may not mean that the base station needs to receive the same preamble in the (X+1) th repetition RO, (X+2) th repetition RO, and the like.

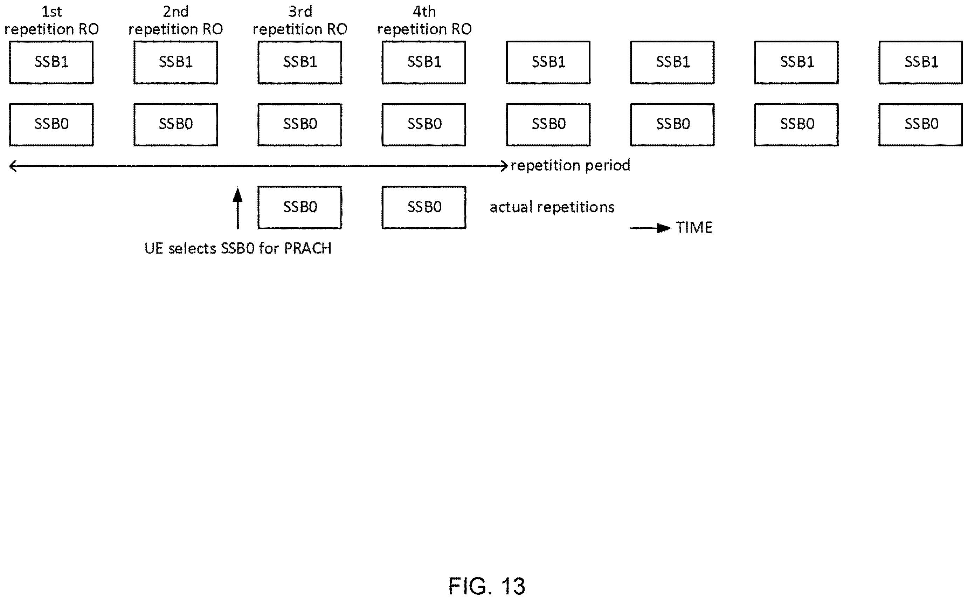

In an example of FIG. 13, the number of repetitions is 4. Four repetition ROs are present in one repetition period. When the UE selects SSB 0 for a PRACH after the second repetition RO, the UE may transmit, in from the third repetition RO associated with the same PRACH preamble/SSB 0 until the last (fourth) repetition RO, the PRACH preamble.

### [Transmission Start RO 2]

The UE may wait until a subsequent repetition period, and may start, from the first repetition RO, PRACH preamble transmission in an associated RO.

### <<Transmission Operation 2»

For the selected beam, the UE may determine a PRACH resource (RO/preamble) on the basis of an RSRP value. In this case, the UE may assume that different PRACH resources with different numbers of repetitions are configured.

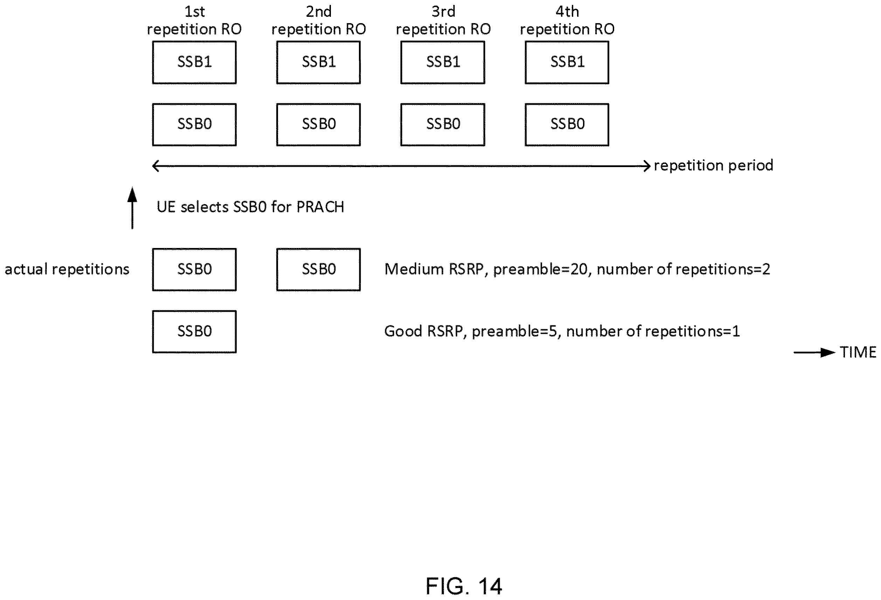

For example, when threshold value 1 ≤ measured RSRP, and a channel state is satisfactory, the UE may select a PRACH resource with the number of repetitions = 1. Here, with respect to selected SSB #0, if preambles 0 to 15 correspond to the number of repetitions = 1, preambles 16 to 31 correspond to the number of repetitions = 2, and preambles 32 to 47 correspond to the number of repetitions = 4, the UE may select one preamble from preambles 0 to 15. In this case, as shown in an example of FIG. 14 (Good RSRP), the UE may select preamble 5.

For example, when threshold value 3 ≤ the measured RSRP < threshold value 2, and the channel state is medium, the UE may select a PRACH resource with the number of repetitions = 2. Here, the UE may select one preamble from preambles 16 to 31. Threshold value 2 may be equal to threshold value 1. In this case, as shown in the example of FIG. 14 (Medium RSRP), the UE may select preamble 20.

For example, when threshold value 5 ≤ the measured RSRP < threshold value 4, and the channel state is unsatisfactory, the UE may select a PRACH resource with the number of repetitions = 4. Here, the UE may select one preamble from preambles 32 to 47. Threshold value 4 may be equal to threshold value 3.

In this transmission operation, the UE may consider a configured number of repetitions for each PRACH resource (may regard the configured number as the number of repetitions).

In this transmission operation, the UE may consider the number of actual remaining repetitions for each PRACH resource (may regard the number of actual remaining repetitions as the number of repetitions).

### <<Transmission Operation 3»

When the UE selects a beam for PRACH transmission (from a plurality of beams), the UE may select the beam in accordance with at least one of selection method 1 to selection method 3 below (with consideration of a parameter according to at least one of selection method 1 to selection method 3).

### [Selection Method 1]

The UE considers an RSRP value of each beam in a manner similar to that of existing specifications.

### [Selection Method 2]

In addition to the RSRP value of each beam, the UE also considers the number of repetitions configured for a PRACH resource associated with each beam. For example, for beams with the same numbers of repetitions for the PRACH resource, the UE may require a comparison of RSRP values of respective beams. For example, for beams with different numbers of repetitions for the PRACH resource and with comparable RSRP values, the UE may select a beam with an appropriate number of repetitions based on an RSRP range (in a manner similar to that of transmission operation 2 mentioned above). For example, for beams with different numbers of repetitions for the PRACH resource and with comparable RSRP values, the UE may select a beam with a maximum number of repetitions. For example, for beams with different RSRP measurement results and with different numbers of repetitions for the PRACH resource, the UE may prioritize any one of the RSRP measurement results and the numbers of repetitions to select a beam.

All SSBs with the same maximum number of repetitions may be configured (in order for all beams to have the same coverage performance). However, for PRACH resources (ROs/preambles) associated with one SSB, some PRACH resources with a greater number of repetitions may be configured, and some PRACH resources with a smaller number of repetitions or without repetition may be configured. The UE to access an arbitrary SSB may select PRACH resources corresponding to different numbers of repetitions.

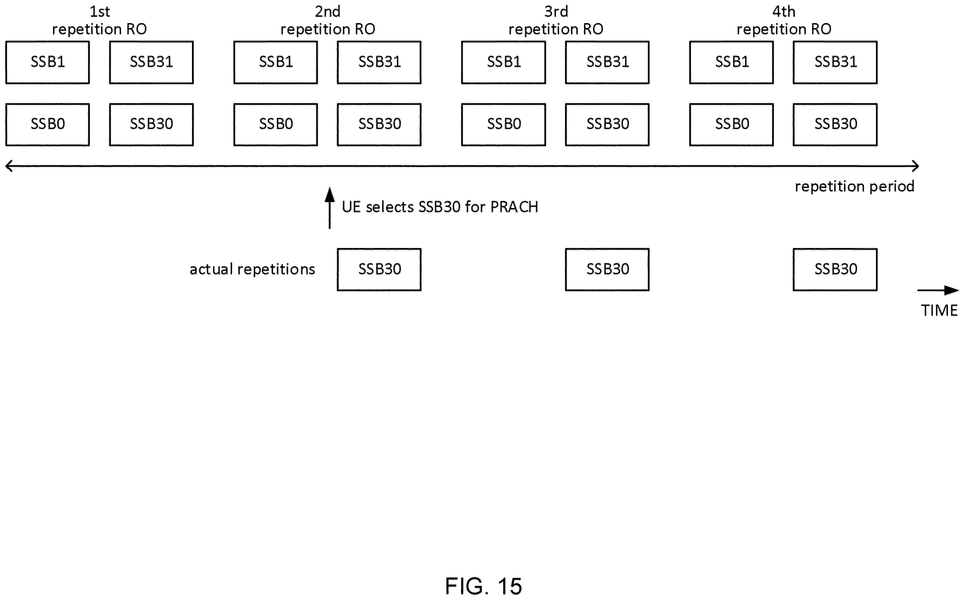

In FIG. 15, the number of repetitions is 4, and four repetition ROs are present in one repetition period. SSB 0, SSB 1, SSB 30, and SSB 31 are mapped in each repetition RO. The UE may select an SSB for a PRACH with consideration of SSB 0 and SSB 30 having the highest RSRP value. Considering that a subsequent RO for SSB 30 is the second repetition RO, and a subsequent RO for SSB 0 is the third repetition RO, the UE may select SSB 30 with a number greater than the number of actual repetitions.

### [Selection Method 3]

In addition to the RSRP value of each beam, the UE also considers a sequence of repetitions of a subsequent available RO associated with the beam (or the number of actual remaining repetitions associated with each beam). Selection method 3 is similar to selection method 2, but differs in that the number of actual repetitions associated with each beam is considered in place of the number of repetitions configured for each beam. In this case, all SSBs may be associated with the same maximum number of repetitions. At a timing at which the UE selects a beam for access, the number of actual remaining repetitions associated with each beam may vary.

For example, for some beams exceeding an RSRP threshold value, the UE may give a beam having the first repetition RO (second repetition RO, third repetition RO, or the like) as a subsequent available repetition RO associated with a beam having priority higher than that of a beam having the second repetition RO (third repetition RO, fourth repetition RO, or the like) as a subsequent available repetition RO associated with a beam. This may mean that the UE selects, from all beams fulfilling the RSRP threshold value, a beam and its RO with a greater number of actual repetitions.

According to this embodiment, the UE can appropriately determine a PRACH resource/beam.

### <Fourth Embodiment>

This embodiment relates to a counter for a preamble.

When the second and subsequent (second, third, ...) repetitions of preambles are transmitted, at least one of parameter 1 to parameter 3 below may not be impacted (may not be incremented). This may mean that repeated preamble transmission does not have an impact on a maximum number/count/power ramping of the number of transmissions.
[Parameter 1] A preamble transmission counter
(PREAMBLE_TRANSMISSION_COUNTER).
[Parameter 2] Preamble power ramping (PREAMBLE_POWER_RAMPING_COUNTER).
[Parameter 3] Preamble received target power
(PREAMBLE_RECEIVED_TARGET_POWER).

According to this embodiment, the UE can appropriately transmit PRACH repetition.

### <Fifth Embodiment>

This embodiment relates to the number of repetitions in a RACH procedure.

Whether the number of PRACH repetitions has an impact on the number of repetitions for a remaining RACH procedure may be any one of impact 1 and impact 2 below.

### [Impact 1]

The number of PRACH repetitions has an impact on the number of repetitions for the remaining RACH procedure. At least one of number of repetitions 1 to number of repetitions 4 below may be derived from the number of PRACH repetitions.
[Number of repetitions 1] The number of repetitions of Msg. 2.
[Number of repetitions 2] The number of repetitions of Msg. 3.
[Number of repetitions 3] The number of repetitions of Msg. 4.
[Number of repetitions 4] The number of repetitions of Msg. 4 HARQ-ACK transmission (PUCCH).

Mapping between PRACH repetition and at least one of number of repetitions 1 to number of repetitions 4 may be configured by higher layer signaling, or may be defined in specifications.

### [Impact 2]

The number of PRACH repetitions does not have an impact on the number of repetitions for the remaining RACH procedure. At least one of number of repetitions 1 to number of repetitions 4 may be determined independently of the PRACH repetition, or may be defined in the specifications.

According to this embodiment, the UE can appropriately determine the number of repetitions in a RACH procedure.

According to this embodiment, the UE can appropriately transmit PRACH repetition.

### <Sixth Embodiment>

This embodiment relates to Msg. 2/Msg. B.

With respect to repetition, Msg. 2 may follow any one of Msg. 2 operation 1 and Msg. 2 operation 2 below.

### [Msg. 2 Operation 1]

Whether Msg. 2 supports the repetition may be configured by an SIB/RRC, or may be configured together with RACH configuration. A UE capability related to Msg. 2 repetition may be defined.

### [Msg. 2 Operation 2]

Repetition of Msg. 2 is not supported.

With respect to repetition, Msg. B may follow any one of Msg. B operation 1 and Msg. B operation 2 below.

### [Msg. B Operation 1]

Whether Msg. B supports the repetition may be configured by an SIB/RRC, or may be configured together with RACH configuration. A UE capability related to Msg. B repetition may be defined.

### [Msg. B Operation 2]

Repetition of Msg. B is not supported.

According to this embodiment, the UE can appropriately receive Msg. 2/Msg. B.

<Seventh Embodiment>

This embodiment relates to monitoring of at least one of DCI for Msg. 2 and Msg. 2.

Whether a UE monitors at least one of DCI with a cyclic redundancy check (CRC) scrambled by an RA-RNTI and Msg. 2 before transmitting all of PRACH repetitions may follow any one of monitoring operation 1, monitoring operation 2, and monitoring operation 2a.

### [Monitoring Operation 1]

The UE does not monitor at least one of the DCI with the CRC scrambled by the RA-RNTI and Msg. 2 before transmitting all of the PRACH repetitions. In this case, power consumption in DCI measurement can be suppressed.

### [Monitoring Operation 2]

The UE monitors at least one of the DCI with the CRC scrambled by the RA-RNTI and Msg. 2 before transmitting all of the PRACH repetitions. In this case, initial access becomes more quickly. After receiving at least one of the DCI with the CRC scrambled by the RA-RNTI and Msg. 2, the UE may not transmit a remaining PRACH, and may not be required to transmit the remaining PRACH.

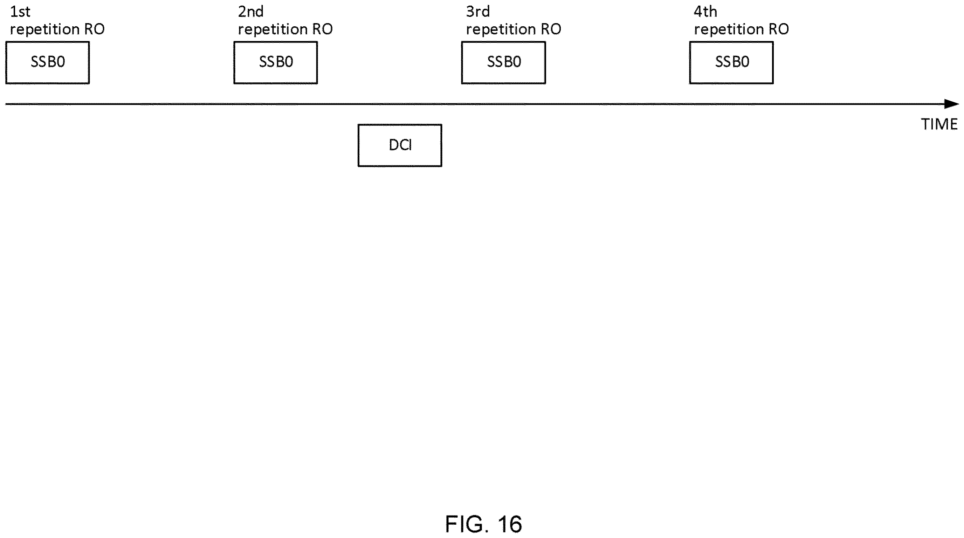

In an example of FIG. 16, the number of PRACH repetitions is 4. The UE may monitor at least one of the DCI with the CRC scrambled by the RA-RNTI and Msg. 2 after the second repetition RO.

### [Monitoring Operation 2a]

The UE may monitor (in a case where the UE can monitor/hopes to monitor) at least one of the DCI with the CRC scrambled by the RA-RNTI and Msg. 2 before transmitting all of the PRACH repetitions. Even if a base station can detect the first PRACH, and transmits Msg. 2, the base station does not recognize whether the UE can monitor Msg. 2. Accordingly, until the base station can receive Msg. 3, the base station may transmit Msg. 2 by assuming that the UE can monitor at least one of the DCI with the CRC scrambled by the RA-RNTI and Msg. 2 after transmitting all of the PRACH repetitions.

According to this embodiment, the UE can appropriately receive Msg. 2.

### <Eighth Embodiment>

In this embodiment, assume that repetition of Msg. 2/Msg. B is absent.

If repetition of Msg. 1 has been configured, a UE/MAC entity may follow at least one of window operation 1 to window operation 3 below with respect to ra-ResponseWindow.

### <<Window Operation 1»

The UE/MAC entity starts ra-ResponseWindow in the first PDCCH occasion since an end of the last actual repetitive transmission of an RA preamble. The last actual repetitive transmission may be the last repetition RO for an associated SSB in a repetition period. This operation means that the UE starts RAR monitoring (which may include monitoring of a base station response to BFR) after transmitting all repeated preambles.

### <<Window Operation 2»

The UE/MAC entity starts/restarts ra-ResponseWindow in the first PDCCH occasion since an end of each actual repetitive transmission of the RA preamble. This operation means that the UE performs RAR monitoring (which may include monitoring of a base station response to BFR) before completing transmission of all repeated preambles. Subsequent preamble repetition may be dropped.

### [Case A]

If a length of ra-ResponseWindow is less than a gap distance between two PRACH preamble repetitions, ra-ResponseWindow may be regarded as three separated windows for RAR monitoring after each PRACH. If RAR reception has succeeded in ra-ResponseWindow, the UE may terminate/drop subsequent PRACH/Msg. 1 repetition. If RAR reception has succeeded in ra-ResponseWindow, the UE may terminate/drop subsequent PRACH/Msg. 1 repetition after Msg. 3 transmission. If RAR reception has succeeded in ra-ResponseWindow, the UE may terminate/drop subsequent PRACH/Msg. 1 repetition after Msg. 4 reception.

### [Case B]

If the length of ra-ResponseWindow is greater than the gap distance between two PRACH preamble repetitions, ra-ResponseWindow may be regarded as one window for RAR monitoring after the first actual PRACH transmission accompanied by a window restart after each repetitive transmission. If RAR reception has succeeded after PRACH repetition, the UE may terminate/drop subsequent preamble repetition (which may be after Msg. 3/Msg. 4, or may not be after Msg. 3/Msg. 4). In this case, the UE may also terminate the window.

Case B may have a very small gap distance by using repetition configuration according to unit resource 2 to unit resource 6 mentioned above.

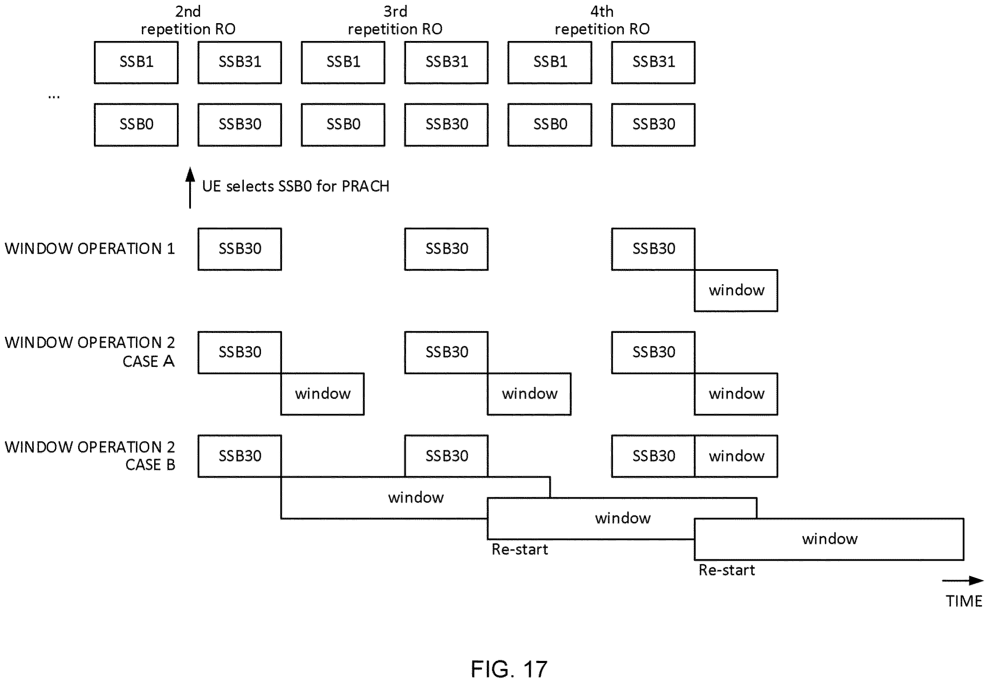

In an example of FIG. 17, similarly to FIG. 15 mentioned above, the UE selects SSB 30, and starts the repetitive transmission from the second repetition RO. In an example of window operation 1, the UE starts ra-ResponseWindow after all repetitions (fourth repetition RO). In an example of case A of window operation 2, the UE starts ra-ResponseWindow after each repetition (each of second, third, and fourth repetition ROs). Each of ra-ResponseWindow lengths is shorter than a time interval between two repetitions. In an example of case B of window operation 2, the UE starts ra-ResponseWindow after each repetition (each of second, third, and fourth repetition ROs). Each of ra-ResponseWindow lengths is longer than a time interval between two repetitions.

### <<Window Operation 3»

The UE/MAC entity starts ra-ResponseWindow in the first PDCCH occasion since an end of the first actual repetitive transmission of the RA preamble. In some cases, the window expires before the UE receives an RAR or before completion of PRACH repetition transmission. If a base station transmits an RAR after the second PRACH repetition, the UE may fail to monitor the RAR.

After the UE starts ra-ResponseWindow after the first actual repetition, the UE may follow any one of window operation 3a, window operation 3b, and window operation 3c below.

### [Window Operation 3a]

The UE may not assume that ra-ResponseWindow expires before an end of the last preamble repetition or before time X (specific time) after the end of the last preamble repetition.

### [Window Operation 3b]

In a case where a window has expired, and a timing of the expiration of the window is before the last repetition RO for SSBs associated with the same preamble or before time X after the last repetition RO for the SSBs associated with the same preamble, if the UE does not succeed in receiving an RAR, the UE may restart the window (considering that a ra-ResponseWindow length is not enough for the last repetition, that is, ra-ResponseWindow expires before the end of the last preamble repetition or before time X (specific time) after the end of the last preamble repetition).

### [Window Operation 3c]

In a case where the timing of expiration of the window is before the last repetition RO for the SSBs associated with the same preamble or before time X after the last repetition RO for the SSBs associated with the same preamble, in addition to restarting the window after the expiration on the basis of window operation 3b, the UE may restart the window after the last repetition.

In each of window operation 3a to window operation 3c, if RAR reception has succeeded after the PRACH repetition, the UE may terminate/drop subsequent preamble repetition (which may be after Msg. 3/Msg. 4, or may not be after Msg. 3/Msg. 4). In this case, the UE may also terminate the window.

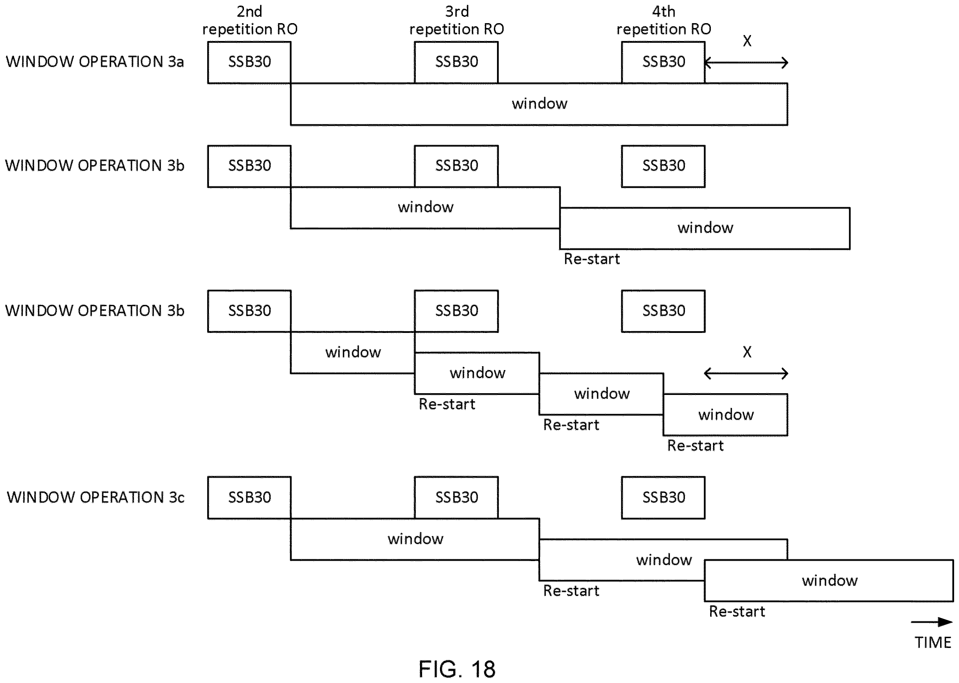

In an example of FIG. 18, similarly to FIG. 15 mentioned above, the UE selects SSB 30, and starts the repetitive transmission from the second repetition RO. In an example of window operation 3a, ra-ResponseWindow is started after the first repetition (first repetition RO), and expires time X after an end of the last repetition (fourth repetition RO). In an example of window operation 3b, ra-ResponseWindow is started after the first repetition (first repetition RO), expires and is restarted before an end of the last repetition (fourth repetition RO), and expires after the last repetition (fourth repetition RO). In another example of window operation 3b, ra-ResponseWindow is started after each repetition, and is restarted when expiring before subsequent repetition. In the last repetition (fourth repetition RO), ra-ResponseWindow expires time X after an end of the repetition. In an example of window operation 3c, ra-ResponseWindow is started after the first repetition (first repetition RO), and expires and is restarted before the last repetition (fourth repetition RO). Furthermore, ra-ResponseWindow is restarted after an end of the last repetition (fourth repetition RO).

A UE capability related to window operation 1/2/3/3a/3b/3c may be defined. A UE capability related to whether to support, when a window expires or is repeated, a restart of the window may be defined.

Window operation 1/2/3/3a/3b/3c may be employed in msgB-ResponseWindow for a 2-step RACH. In this case, for a start of a window after each PRACH preamble in each window operation, a symbol with at least one of values of the last symbols for PRACH occasions corresponding to PRACH transmission may be additionally considered.

According to this embodiment, the UE can appropriately receive Msg. 2/Msg. B.

### <Ninth Embodiment>

This embodiment relates to an RNTI.

RA-RNTI calculation may follow at least one of calculation method 1 to calculation method 4 below.

### <<Calculation Method 1»

The RA-RNTI calculation uses a parameter of the first actual PRACH transmission in all repetition ROs. For example, the parameter may include s_id/t_id/f_id. This calculation method can be employed in all window operations of an eighth embodiment.

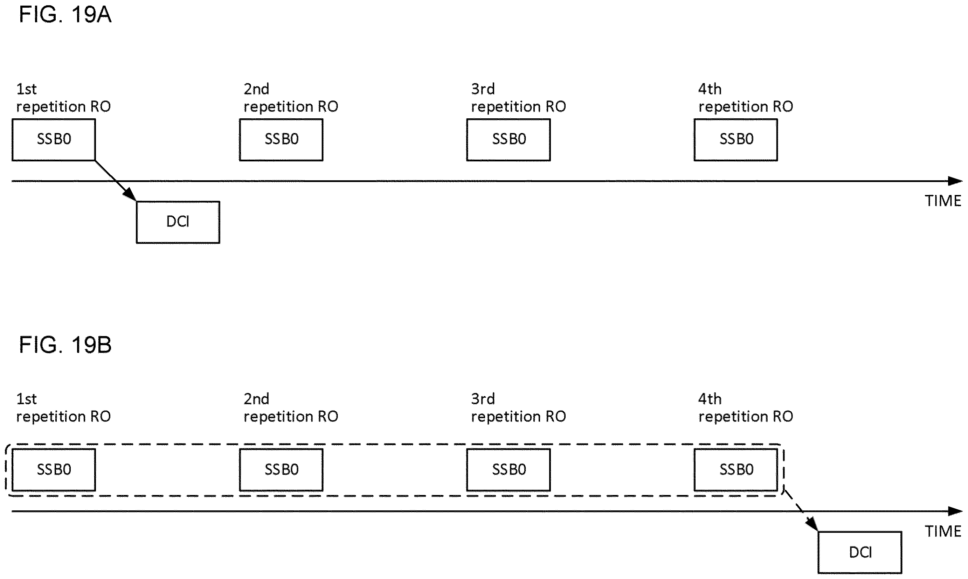

In an example of FIG. 19A, the number of repetitions is 4, and at least one of DCI with a CRC scrambled by an RA-RNTI and Msg. 2 is associated with the first repetition RO. The RA-RNTI is calculated by using the parameter of the first actual PRACH transmission.

### <<Calculation Method 2»

The RA-RNTI calculation uses a parameter of PRACH transmission in the last repetition. For example, the parameter may include s_id/t_id/f_id. This calculation method can be employed in window operation 1 of the eighth embodiment.

### <<Calculation Method 3»

The RA-RNTI calculation uses a parameter of PRACH transmission in each repetition (latest repetition) before an end of subsequent repetition RO. For example, the parameter may include s_id/t_id/f_id. This calculation method can be employed in window operation 2/3 of the eighth embodiment.

In an example of FIG. 19B, the number of repetitions is 4, and at least one of DCI with a CRC scrambled by an RA-RNTI and Msg. 2 is associated with each repetition RO. The RA-RNTI for the DCI after the last repetition is calculated by using a parameter of the last PRACH transmission.

### <<Calculation Method 4»

The RA-RNTI calculation considers different parameters after a restart of ra-ResponseWindow. For example, the parameters may include s_id/t_id/f_id. For example, when the window is restarted after certain repetition, the RA-RNTI calculation may use a parameter of the latest repetition for an RA-RNTI in a subsequent window time. For example, when the window is restarted after expiration of the window, the RA-RNTI calculation may use the parameter of the latest repetition for the RA-RNTI in the subsequent window time, or may not update the parameter for the RA-RNTI in this condition.

A UE capability related to whether to change an RA-RNTI for a window for repetition of PRACH preamble transmission may be defined.

Different calculation methods out of calculation method 1 to calculation method 4 may be employed in a plurality of window operations in the eighth embodiment, in different windows in certain window operation in the eighth embodiment, or in different duration/lengths of respective windows in the eighth embodiment.

Calculation method 1 to calculation method 4 may be employed in an MSGB-RNTI for a 2-step RACH.

According to this embodiment, the UE can appropriately receive Msg. 2/Msg. B.

### <Tenth Embodiment>

This embodiment relates to a UE capability.

How a UE reports a UE capability related to support for PRACH repetition may follow any one of reporting method 1 and reporting method 2 below.

### <<Reporting Method 1»

Different preambles/occasions for a PRACH may be defined for the UE that supports the PRACH repetition and for the UE that does not support the PRACH repetition. The UE that does not support the PRACH repetition may include a Rel-15/16 UE.

Different preambles/occasions for the PRACH may be defined for the UE that supports different numbers (maximum numbers) of PRACH repetitions.

By using the different preambles/occasions for the PRACH, a base station can recognize whether the UE supports the PRACH repetition. Furthermore, the UE may transmit, in Msg. 3 or a subsequent RRC IE/MAC CE, additional information about the UE capability to support the PRACH repetition. For example, the additional information may be a maximum number of PRACH repetitions supported by the UE, or may indicate whether to support at least one of PRACH repetition in a 2-step RACH and PRACH repetition in a 4-step RACH.

### <<Reporting Method 2»

The same preamble/occasion for the PRACH may be defined for the UE that supports the PRACH repetition and for the UE that does not support the PRACH repetition. The UE that does not support the PRACH repetition may include a Rel-15/16 UE.

The base station fails to recognize, by using PRACH measurement, whether the UE supports the PRACH repetition. The UE may transmit, in Msg. 3 or a subsequent RRC IE/MAC CE, additional information about the UE capability to support the PRACH repetition. For example, the additional information may indicate whether the UE supports the PRACH repetition, may be a maximum number of PRACH repetitions supported by the UE, or may indicate whether to support at least one of PRACH repetition in a 2-step RACH and PRACH repetition in a 4-step RACH.

According to this embodiment, the UE can appropriately transmit PRACH repetition.

### <Other Embodiments>

### <<UE Capability Information/Higher Layer Parameter>>

A higher layer parameter (RRC IE)/UE capability corresponding to a function (characteristic, feature) in each embodiment described above may be defined. The higher layer parameter may indicate whether the function is enabled. The UE capability may indicate whether a UE supports the function.

A UE for which the higher layer parameter corresponding to the function has been configured may perform the function. A "case that a UE for which the higher layer parameter corresponding to the function has not been configured does not perform the function (for example, follows Rel. 15/16)" may be defined.

A UE that has reported/transmitted the UE capability indicating that the function is supported may perform the function. A "case that a UE that has not reported the UE capability indicating that the function is supported does not perform the function (for example, follows Rel. 15/16)" may be defined.

When a UE has reported/transmitted the UE capability indicating that the function is supported, and the higher layer parameter corresponding to the function has been configured, the UE may perform the function. A "case that when a UE does not report/transmit the UE capability indicating that the function is supported or when the higher layer parameter corresponding to the function is not configured, the UE does not perform the function (for example, follows Rel. 15/16)" may be defined.

Which embodiment/option/choice/function out of a plurality of embodiments described above is used may be configured by a higher layer parameter, may be reported by a UE as a UE capability, may be defined in specifications, or may be determined by a reported UE capability and higher layer parameter configuration.

The UE capability may indicate whether the UE supports at least one function of the following.
- PRACH repetition or PRACH repetition resource configuration
- At least one of PRACH repetition in CFRA and PRACH repetition in CBRA
- At least one of PRACH repetition in 2-step RACH and PRACH repetition in 4-step RACH
- PRACH repetition in RA for specific purpose
- One or more unit resources out of unit resource 1 to unit resource 6
- Repetition of Msg. 2
- Repetition of Msg. B
- Window operation 1/2/3/3a/3b/3c
- Restarting window when that window expires or is repeated
- Changing RA-RNTI for window for repetition of PRACH preamble transmission

The UE capability may indicate at least one value of the following.
- Number of PRACH repetitions (maximum number)
- Configuration of repetition period

According to the UE capability/higher layer parameter described above, the UE can achieve the above-described function while maintaining compatibility with existing specifications.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

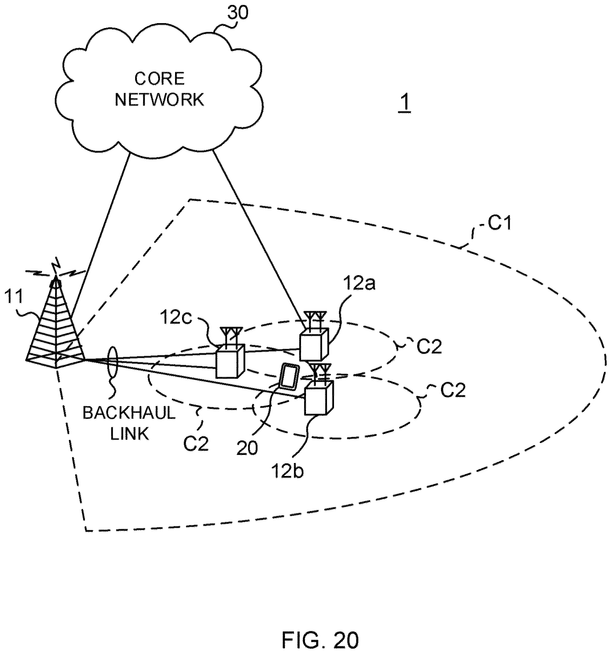

FIG. 20 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

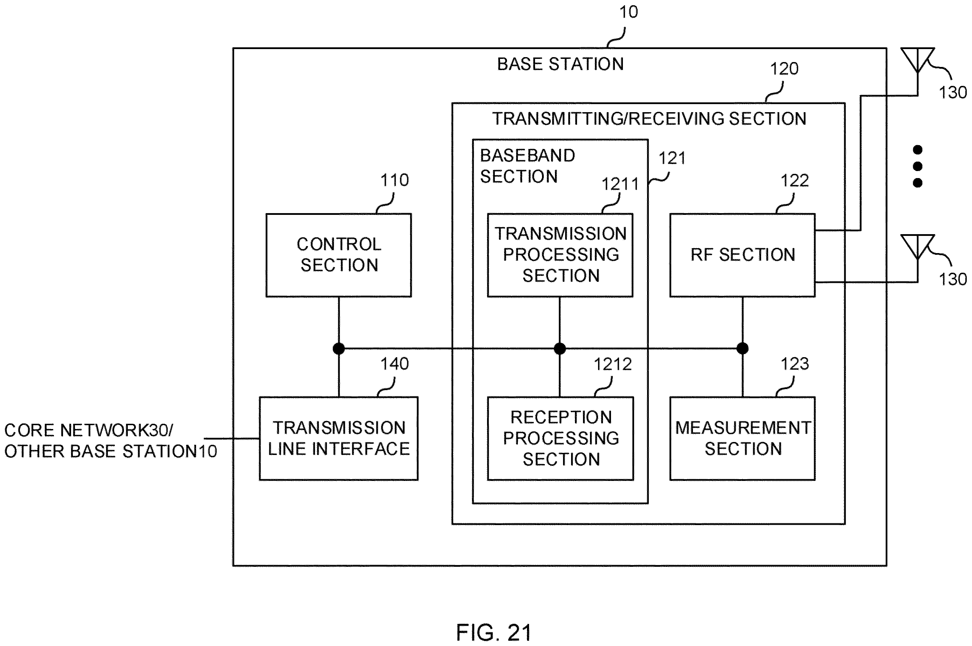

FIG. 21 is a diagram to show an example of a structure of a base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, demapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit a configuration related to repetition of a physical random access channel. The control section 110 may control reception of the repetition accompanied by a same beam.

The transmitting/receiving section 120 may transmit a configuration related to repetition of a physical random access channel. The control section 110 may determine a plurality of resources for the repetition accompanied by a same beam.

The transmitting/receiving section 120 may transmit a configuration related to repetition of a physical random access channel in a random access procedure. The control section 110 may determine, on the basis of the configuration, whether to perform repetition of reception or transmission of anything other than the physical random access channel, out of the random access procedure.

The transmitting/receiving section 120 may receive a configuration related to repetition of a physical random access channel in a random access procedure. The control section 110 may determine, on the basis of the configuration, whether to perform repetition of reception or transmission of anything other than the physical random access channel, out of the random access procedure.

The transmitting/receiving section 120 may receive a plurality of repetitions of a physical random access channel. The control section 110 may determine a radio network temporary identifier (RNTI) for transmission of a response to the physical random access channel.

### (User Terminal)

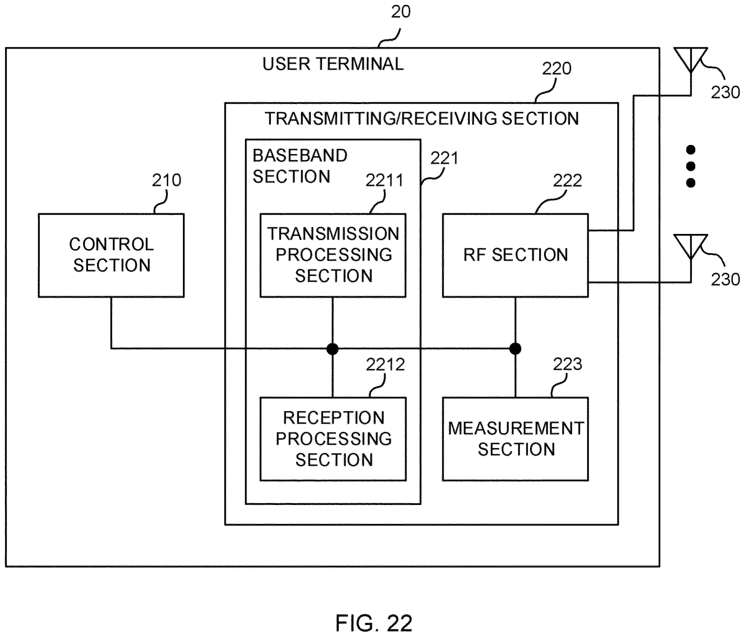

FIG. 22 is a diagram to show an example of a structure of a user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive a configuration related to repetition of a physical random access channel. The control section 210 may control transmission of the repetition accompanied by a same beam.

The physical random access channel may be present in a random access procedure of a specific type.

A resource for the repetition may be based on any one of a periodicity of mapping between an occasion for the physical random access channel and a synchronization signal block, a configuration period for the physical random access channel, a time unit, a frequency unit, the occasion, and the synchronization signal block.

The resource may be different from a resource for a physical random access channel without repetition.

The transmitting/receiving section 220 may receive a configuration related to repetition of a physical random access channel. The control section 210 may determine a plurality of resources for the repetition accompanied by a same beam.

The control section 210 may determine, on the basis of a timing of determination of a synchronization signal block, a resource for a start of transmission of the repetition out of the plurality of resources.

The control section 210 may determine the plurality of resources on the basis of received power.

The control section 210 may change a specific parameter in first repetition, and may not change the specific parameter in second and subsequent repetition.

The transmitting/receiving section 220 may receive a configuration related to repetition of a physical random access channel in a random access procedure. The control section 210 may determine, on the basis of the configuration, whether to perform repetition of reception or transmission of anything other than the physical random access channel, out of the random access procedure.

The control section 210 may determine the number of repetitions of the reception or transmission on the basis of the number of repetitions of the physical random access channel.

The control section 210 may determine the number of repetitions of the reception or transmission independently of the number of repetitions of the physical random access channel.

The control section 210 may receive repetition of at least one of message 2 and message B.

The transmitting/receiving section 220 may transmit a plurality of repetitions of a physical random access channel. The control section 210 may control reception of a response to the physical random access channel.

The control section 210 may control the reception of the response after transmission of the plurality of repetitions.

The control section 210 may control the reception of the response before completion of transmission of the plurality of repetitions.

A window for the reception of the response may expire specific time after transmission of the plurality of repetitions.

The transmitting/receiving section 220 may transmit a plurality of repetitions of a physical random access channel. The control section 210 may determine a radio network temporary identifier (RNTI) for reception of a response to the physical random access channel.

The control section 210 may calculate the RNTI on the basis of a parameter of first repetition out of the plurality of repetitions.

The control section 210 may calculate the RNTI on the basis of a parameter of last repetition out of the plurality of repetitions.

The control section 210 may calculate the RNTI on the basis of a parameter of latest repetition out of the plurality of repetitions, the latest repetition being before an end of an occasion for subsequent repetition.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

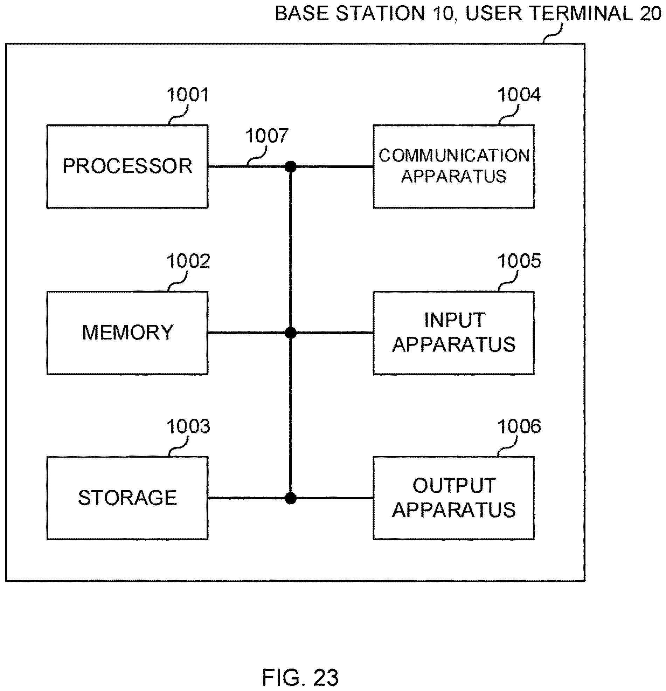

For example, a base station, a user terminal, and so on according to one embodiment of the present disclosure may function as a computer that executes the processes of the radio communication method of the present disclosure. FIG. 23 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on.

The moving object refers to a mobile object, of which moving speed is any speed, and also includes, as a matter of course, a case in which the moving object is stationary. For example, the moving object includes, but is not limited to, a vehicle, a transport vehicle, an automobile, a motorcycle, a bicycle, a connected car, an excavator, a bulldozer, a wheel loader, a dump truck, a forklift, a train, a bus, a handcart, a rickshaw, a ship and other watercraft, an airplane, a rocket, an artificial satellite, a drone, a multirotor, a quadcopter, a hot air balloon, and an object loaded on these. The moving object may be a moving object that autonomously moves based on an operation command.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

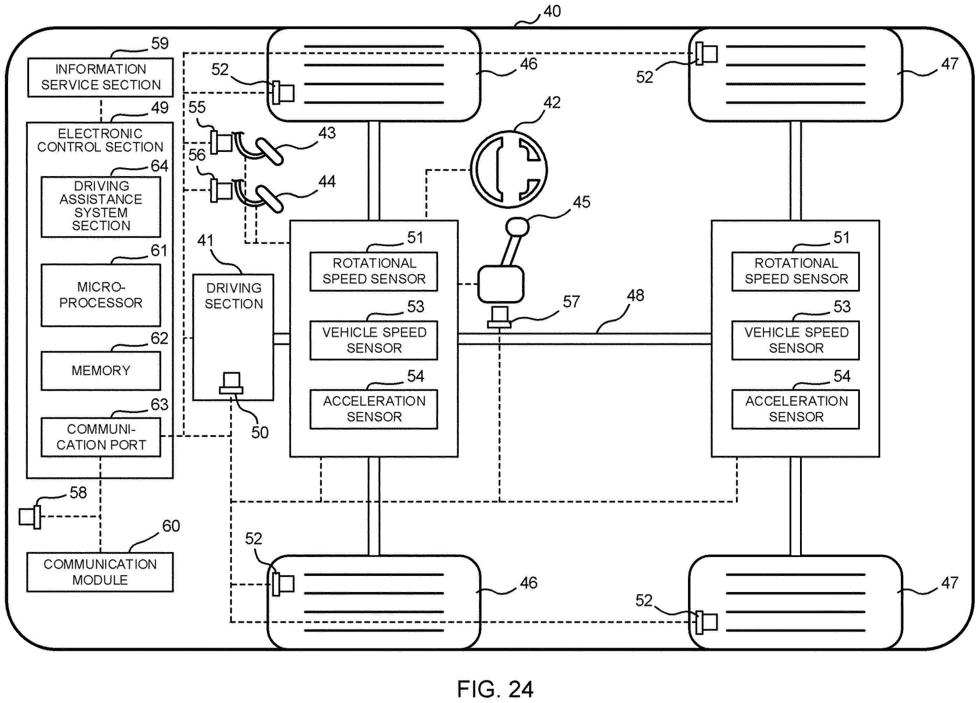

FIG. 24 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 at least includes a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, am input/output (IO) port) 63. The electronic control section 49 receives, as input, signals from the various sensors 50 to 58 included in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes various devices for providing (outputting) various pieces of information such as drive information, traffic information, and entertainment information, such as a car navigation system, an audio system, a speaker, a display, a television, and a radio, and one or more ECUs that control these devices. The information service section 59 provides various pieces of information/services (for example, multimedia information/multimedia service) for an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV)) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor, and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, via the communication port 63, the communication module 60 transmits and receives data (information) to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 can be controlled by the microprocessor 61 of the electronic control section 49, and is a communication device that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals from the various sensors 50 to 58 described above input to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the various pieces of information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may perform control of the driving section 41, the steering section 42, the accelerator pedal 43, the brake pedal 44, the shift lever 45, the right and left front wheels 46, the right and left rear wheels 47, the axle 48, the various sensors 50 to 58, and the like included in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a receiving section that receives a configuration related to repetition of a physical random access channel in a random access procedure; and
a control section that determines, on the basis of the configuration, whether to perform repetition of reception or transmission of anything other than the physical random access channel, out of the random access procedure.

2. The terminal according to claim 1, wherein
the control section determines the number of repetitions of the reception or transmission on the basis of the number of repetitions of the physical random access channel.

3. The terminal according to claim 1, wherein
the control section determines the number of repetitions of the reception or transmission independently of the number of repetitions of the physical random access channel.

4. The terminal according to any one of claims 1 to 3, wherein
the control section receives repetition of at least one of message 2 and message B.

5. A radio communication method for a terminal, the radio communication method comprising:
receiving a configuration related to repetition of a physical random access channel in a random access procedure; and
determining, on the basis of the configuration, whether to perform repetition of reception or transmission of anything other than the physical random access channel, out of the random access procedure.

6. A base station comprising:
a transmitting section that transmits a configuration related to repetition of a physical random access channel in a random access procedure; and
a control section that determines, on the basis of the configuration, whether to perform repetition of reception or transmission of anything other than the physical random access channel, out of the random access procedure.
